# EUROPEAN PATENT SPECIFICATION

(11) **EP 4 312 331 B1**
(45) Date of publication and mention of the grant of the patent: **03.09.2025**
(21) Application number: 23187392.8
(22) Date of filing: 24.07.2023
(51) Int. Cl.: H02J 3/01, H02J 3/38, H02M 1/12, H02M 7/5395

(54) **POWER SUPPLY SYSTEM AND GRID-CONNECTED CONTROL METHOD**
STROMVERSORGUNGSSYSTEM UND NETZGEKOPPELTES STEUERUNGSVERFAHREN
SYSTÈME D'ALIMENTATION ÉLECTRIQUE ET PROCÉDÉ DE COMMANDE CONNECTÉ AU RÉSEAU

(30) Priority: 25.07.2022 CN 202210879062
(43) Date of publication of application: 31.01.2024
(73) Proprietor: Huawei Digital Power Technologies Co., Ltd., Shenzhen, Guangdong 518043 (CN)
(72) Inventor: XU, Fei, 518043 Shenzhen (CN); YU, Xinyu, 518043 Shenzhen (CN); XIN, Kai, 518043 Shenzhen (CN); WANG, Shuchao, 518043 Shenzhen (CN)
(74) Representative: Gill Jennings & Every LLP

(56) References cited:
- WO-A1-2014/129583
- US-A1- 2017 141 571

## Description

### TECHNICAL FIELD

This application relates to the field of power electronics technologies, and in particular, to a power supply system and a grid-connected control method.

### BACKGROUND

In the field of power electronics technologies, as various new-energy power supply (for example, photovoltaic power generation) technologies become increasingly mature, more and more new-energy power supply systems are put into use. As a core component of a new-energy power supply system, an inverter circuit can convert direct current electric energy generated by a new-energy power station into alternating current electric energy for connection to a power grid. However, a load usually exists between the new-energy power station and the power grid, and the load needs to obtain a harmonic current from the power grid. As a result, a voltage at a grid-tied point at a connection joint between the new-energy power supply system and the power grid is severely distorted, which increases a loss of an electric energy device and jeopardizes device safety. In a research and practice process, the inventor of this application finds that, in the conventional technology, an active power filter (Active Power Filter, APF) is usually used to provide a harmonic current for a load. However, the APF has a simplistic function and a complex structure, and requires configuration of an additional power supply, which is complex and cumbersome and increases system costs.

US 2017/0141571 Al discloses a mixed signal controller for a power quality compensator includes an analog circuit, an analog-to-digital converter (ADC), and a digital circuit. The analog circuit amplifies an input signal from the power quality compensator by a gain factor and outputs an analog signal, which is converted to a digital signal by the ADC. The digital circuit receives the digital signal, calculates the reference compensating current of each phase and then generates a trigger signal via hysteresis PWM to the power quality compensator. The digital circuit includes an evaluation circuit that calculates a value of the system total harmonic distortion after the power quality compensator compensates power and adjusts the gain factor when the value of the system total harmonic distortion reaches a predetermined threshold.

WO 2014/129583 A1 discloses a periodic disturbance reduction controller, wherein an improvement is realized in a learning function having higher stability and better responsiveness. When a difference in a harmonic amplitude continuously becomes equal to or greater than a threshold, a divergence state is assumed; when a transfer amount of a harmonic vector is continuously equal to or less than a threshold, a stagnant state is assumed. In the case of the divergence state, the learning function is turned on, an amplitude error command value or a phase error command value is updated on the basis of an amplitude error estimation value and a phase error estimation value, and a reciprocal of a transfer characteristic is corrected on the basis of the amplitude error command value or the phase error command value, an amplitude error initial value, and a phase error initial value. In the case of the stagnant state, when a stagnant period continues for a threshold or beyond, the amplitude error command value is updated on the basis of the amplitude error estimation value, and the reciprocal of the transfer characteristic is corrected on the basis of the amplitude error command value and the amplitude error initial value.

### SUMMARY

The invention refers to a power supply system according to claim 1 and a corresponding grid-connected control method according to claim 9. Preferred embodiments are defined in the dependent claims.

In a first aspect of the present invention, there is provided a power control system according to claim 1. In a second aspect of the present invention, there is provided a grid-connected control method according to claim 9.

This application provides a power supply system and a grid-connected control method, so that a harmonic current can be provided for a load by using an inverter circuit in the power supply system, to increase a sinusoidal degree of a current at a grid-tied point. A structure is simple, and a control method is convenient, thereby improving electric energy quality of the power supply system, prolonging a service life of a component, and reducing costs.

According to a first aspect, this application provides a power supply system. The power supply system includes a power supply, a collection control circuit, a load, and an inverter, and the collection control circuit includes a grid-connected collection module and a control module. Herein, the power supply may be connected to the load by using the inverter, the load and a power grid may be connected at a grid-tied point, an input terminal of the grid-connected collection module may be connected to the grid-tied point, and an output terminal of the grid-connected collection module may be connected to the inverter by using the control module. Herein, the load may be a load whose voltage and current are in a non-linear relationship in a running (power supply or power consumption) process, such as a motor or a rectifier device. The grid-connected collection module herein may be configured to obtain a harmonic current value of a grid-connected current at the grid-tied point, and when the harmonic current value of the grid-connected current is greater than or equal to a target harmonic threshold, generate a current compensation signal based on the harmonic current value of the grid-connected current. The control module herein may be configured to generate an inverter control signal based on the current compensation signal, and may control, by using the inverter control signal, the inverter to output a harmonic compensation current to the load.

In an implementation provided in this application, a load may be included between the power supply in the power supply system and the grid-tied point connected to the power grid. Herein, the load may be a load whose voltage and current are in a non-linear relationship in a running (power supply or power consumption) process, such as a motor or a rectifier device. In the power supply system, the grid-connected collection module may be configured to obtain the harmonic current value of the grid-connected current at the grid-tied point, and when the harmonic current value of the grid-connected current is greater than or equal to the target harmonic threshold, generate the current compensation signal based on the harmonic current value of the grid-connected current. Herein, the grid-connected collection module may obtain a current value of the grid-connected current at the grid-tied point, and perform signal processing (for example, a signal processing method such as discrete Fourier transform or fast Fourier transform), to obtain the harmonic current value of the grid-connected current. It can be understood that the target harmonic threshold herein may be a preset value, or may be a value determined by means of real-time calculation based on a running status or a system parameter of the power supply system. Further, it can be understood that the target harmonic threshold may be a plurality of values (for example, harmonics of different types (or different frequencies) correspond to different target harmonic thresholds), or may be one value (for example, statistical magnitude of harmonics of different types (or different frequencies) corresponds to one target harmonic threshold). The control module may generate the inverter control signal based on the current compensation signal, and may control, by using the inverter control signal, the inverter to output the harmonic compensation current to the load. Herein, the grid-connected collection module may generate the current compensation signal based on the harmonic current value of the grid-connected current, and the control module may control, based on the current compensation signal generated by the grid-connected collection module, the inverter to output the harmonic compensation current to the load. In addition, it can be understood that when the control module controls the inverter to output the harmonic compensation current to the load, the inverter may simultaneously output a fundamental current to the grid-tied point (herein, the fundamental current may be a current output by the inverter to the grid-tied point after converting direct current energy of the power supply into alternating current energy). In other words, the control module may control the inverter to provide a harmonic current for the load by using the harmonic compensation current, so as to reduce interference caused by the load to the grid-connected current at the grid-tied point, reduce a harmonic component in the grid-connected current at the grid-tied point, and increase a sinusoidal degree of the grid-connected current at the grid-tied point.

According to the implementation provided in this application, when the harmonic current value of the grid-connected current at the grid-tied point is greater than or equal to the target harmonic threshold, the current compensation signal may be generated based on the harmonic current value of the grid-connected current. In addition, the inverter control signal is generated based on the current compensation signal, and the inverter control signal is used to control the inverter to output the harmonic compensation current to the load, so as to reduce the interference caused by the load to the grid-connected current at the grid-tied point, reduce the harmonic component in the grid-connected current at the grid-tied point, and increase the sinusoidal degree of the grid-connected current at the grid-tied point. A structure is simple, and a control method is convenient, thereby improving electric energy quality of the power supply system, prolonging a service life of a component, and reducing costs.

With reference to the first aspect, in a first possible implementation, the inverter may include a plurality of inverter circuits, and the plurality of inverter circuits are connected in parallel; and the control module herein may be further configured to control, by using the inverter control signal, a target inverter circuit in the inverter to output the harmonic compensation current to the load and stop outputting a fundamental current to the grid-tied point. Herein, the target inverter circuit is an inverter circuit that requires current compensation in the plurality of inverter circuits. The control module herein may be further configured to: when the target inverter circuit outputs the harmonic compensation current to the load, control a non-target inverter circuit in the inverter to output a target fundamental current to the grid-tied point, where a current value of the target fundamental current is a target fundamental current value. It can be understood that the inverter may include a plurality of inverter circuits. The plurality of inverter circuits may convert direct current energy of the power supply into alternating current energy, and output the alternating current energy to the grid-tied point in a form of a fundamental current. Herein, there may be one or more target inverter circuits (that is, an inverter circuit that outputs a harmonic compensation current to the load). The control module may determine, based on the current compensation signal, a quantity of inverter circuits that need to output a harmonic compensation current, and then determine the target inverter circuit in the inverter. In other words, the control module may determine an inverter circuit that requires current compensation in the plurality of inverter circuits of the inverter as the target inverter circuit. When the control module controls the target inverter circuit to output the harmonic compensation current to the load, the control module may control the target inverter circuit to stop outputting the fundamental current to the grid-tied point, and control the non-target inverter circuit to output the target fundamental current to the grid-tied point. Herein, the current value of the target fundamental current is the target fundamental current value. The target fundamental current value herein may be a preset value, or may be a value determined in real time based on a parameter of the power supply system, a quantity of target inverter circuits, and a quantity of non-target inverter circuits.

According to the implementation provided in this application, the control module may control, by using the inverter control signal, the target inverter circuit to output the harmonic compensation current to the load and stop outputting the fundamental current to the grid-tied point. In addition, when the target inverter circuit outputs the harmonic compensation current to the load, the control module may control the non-target inverter circuit in the inverter to output the target fundamental current to the grid-tied point, and when the target inverter circuit provides the harmonic current for the load, control the non-target inverter circuit to output the target fundamental current. In this way, the non-target inverter circuit can output the fundamental current to the grid-tied point, and supply energy to another linear load in the power supply system or the power grid. A structure is simple, and a control method is convenient, thereby further improving the electric energy quality of the power supply system.

With reference to the first possible implementation of the first aspect, in a second possible implementation, the grid-connected collection module may be further configured to: when the harmonic current value of the grid-connected current is greater than or equal to the target harmonic threshold, obtain a first compensation current value based on the harmonic current value of the grid-connected current and the target harmonic threshold, to use the first compensation current value as the generated current compensation signal. Herein, the grid-connected collection module may obtain a current value of the grid-connected current at the grid-tied point, and perform signal processing (for example, a signal processing method such as discrete Fourier transform or fast Fourier transform), to obtain the harmonic current value of the grid-connected current. When the harmonic current value of the grid-connected current is greater than or equal to the target harmonic threshold, the grid-connected collection module may obtain the first compensation current value based on the harmonic current value of the grid-connected current and the target harmonic threshold (for example, a difference between the harmonic current value of the grid-connected current and the target harmonic threshold is obtained and used as the first compensation current value), and transmit the first compensation current value to the control module in real time as the current compensation signal, so as to control the inverter circuit in the inverter in real time to output the harmonic compensation current. It can be understood that the target harmonic threshold herein may be a preset value, or may be a value determined by means of real-time calculation based on a running status or a system parameter of the power supply system. Further, it can be understood that the target harmonic threshold may be a plurality of values (for example, harmonics of different types (or different frequencies) correspond to different target harmonic thresholds), or may be one value (for example, statistical magnitude of harmonics of different types (or different frequencies) corresponds to one target harmonic threshold). Furthermore, it can be understood that the first compensation current value herein may be a value obtained by collecting and combining compensation current values of a plurality of harmonics, or may be a plurality of values corresponding to compensation current values of a plurality of harmonics. According to the implementation provided in this application, the grid-connected collection module can obtain the first compensation current value in real time based on the harmonic current value of the grid-connected current and the target harmonic threshold, and transmit the first compensation current value to the control module as the current compensation signal, so as to control the inverter circuit in the inverter in real time to output the harmonic compensation current. A structure is simple, and a control method is convenient and flexible, thereby improving electric energy quality of the power supply system, prolonging a service life of a component, and reducing costs.

With reference to the first possible implementation of the first aspect, in a third possible implementation, the collection control circuit may further include an inverter collection module. Herein, the grid-connected collection module may be connected to the control module by using the inverter collection module, a connection point between each inverter circuit of the inverter and the load is an inverter connection point, the inverter collection module may include a plurality of detection terminals, and each detection terminal of the inverter collection module is correspondingly connected to the inverter connection point of each inverter circuit. The grid-connected collection module herein may be further configured to: when the harmonic current value of the grid-connected current is greater than or equal to the target harmonic threshold, obtain a plurality of current values of the grid-connected current within a target detection time period, and perform analysis on the plurality of current values of the grid-connected current to obtain a harmonic order, a harmonic amplitude, and a harmonic phase of the grid-connected current in a case in which an amplitude of the grid-connected current is greater than or equal to the target harmonic threshold, to use the harmonic order, the harmonic amplitude, and the harmonic phase as a generated primary current compensation signal. The inverter collection module herein may be configured to obtain a phase of an output voltage of a target inverter circuit corresponding to the inverter collection module, and obtain a second compensation current value based on the phase of the output voltage of the target inverter circuit and the primary current compensation signal, to use the second compensation current value as the generated current compensation signal. It can be understood that, when the harmonic current value of the grid-connected current is greater than or equal to the target harmonic threshold, the grid-connected collection module may obtain the plurality of current values of the grid-connected current within the target detection time period, and perform analysis (for example, a signal processing method such as discrete Fourier transform or fast Fourier transform) on the plurality of current values of the grid-connected current to obtain the harmonic order, the harmonic amplitude, and the harmonic phase of the grid-connected current in the case in which the amplitude of the grid-connected current is greater than or equal to the target harmonic threshold. The target detection time period herein may be a preset time period, or may be a time period such as a detection time period calculated based on a time interval between two adjacent detection time points and a quantity of times of detection. Further, it can be understood that, in some scenarios in which the grid-connected collection module and the control module cannot or do not need to perform real-time communication, the grid-connected collection module may transmit, to the inverter collection module as the primary current compensation signal, the harmonic order, the harmonic amplitude, and the harmonic phase of the grid-connected current in the case in which the amplitude of the grid-connected current is greater than or equal to the target harmonic threshold. Herein, when receiving the primary current compensation signal, the inverter collection module may obtain the phase of the output voltage of the target inverter circuit (for example, at a zero-crossing moment of the output voltage, determine that the phase of the output voltage is 0), and generate the second compensation current value based on the phase of the output voltage and the primary current compensation signal, to use the second compensation current value as the generated current compensation signal. Herein, because there is a time difference in a process in which the grid-connected collection module transmits the primary current compensation signal to the inverter collection module, the inverter collection module may generate the current compensation signal by using the phase of the output voltage of the target inverter circuit as a synchronization parameter, to ensure that the current compensation signal transmitted by the inverter collection module to the control module is synchronous, thereby improving consistency and synchronization performance of the harmonic compensation current output by the target inverter circuit under control of the control module.

According to the implementation provided in this application, in some scenarios in which the grid-connected collection module and the control module cannot or do not need to perform real-time communication, the grid-connected collection module may transmit, to the inverter collection module as the primary current compensation signal, the harmonic order, the harmonic amplitude, and the harmonic phase of the grid-connected current in the case in which the amplitude of the grid-connected current is greater than or equal to the target harmonic threshold. When receiving the primary current compensation signal, the inverter collection module may obtain the phase of the output voltage of the target inverter circuit (for example, at the zero-crossing moment of the output voltage, determine that the phase of the output voltage is 0), and generate the current compensation signal by using the phase of the output voltage of the target inverter circuit as a synchronization parameter, to ensure that the current compensation signal transmitted by the inverter collection module to the control module is synchronous, thereby improving the consistency and the synchronization performance of the harmonic compensation current output by the target inverter circuit under control of the control module. A control method is convenient and flexible, an application scenario of the power supply system is further enriched, and electric energy quality of the power supply system is improved.

With reference to the second possible implementation or the third possible implementation of the first aspect, in a fourth possible implementation, the control module may include a phase control unit and an amplitude control unit. Herein, the grid-connected collection module is connected to the phase control unit, and the phase control unit may be connected to the inverter by using the amplitude control unit. The phase control unit herein may be configured to obtain the current compensation signal and perform phase inversion on the current compensation signal to generate a phase control signal. The amplitude control unit herein may be configured to generate the inverter control signal based on the current compensation signal and the phase control signal, and may control, by using the inverter control signal, the target inverter circuit in the inverter to output the harmonic compensation current to the load. Herein, a current value of the harmonic compensation current is a first compensation current value or a second compensation current value, and a phase of the harmonic compensation current is the same as a phase of the phase control signal. According to the implementation provided in this application, the phase control unit may perform phase inversion on the current compensation signal to generate the phase control signal, and the amplitude control unit may generate the inverter control signal (for example, a pulse width modulated signal or another control signal that can control an inverter circuit to output a current) based on the current compensation signal and the phase control signal, thereby further improving power supply efficiency of the power supply system. A structure is simple, and control is convenient.

With reference to the fourth possible implementation of the first aspect, in a fifth possible implementation, the power supply system may further include a transformer circuit, and the power supply may be connected to the inverter by using the transformer circuit.

With reference to the fifth possible implementation of the first aspect, in a sixth possible implementation, the power supply system may further include a combiner box, and the transformer circuit may be connected to the inverter by using the combiner box.

With reference to the sixth possible implementation of the first aspect, in a seventh possible implementation, the power supply system may further include a direct current bus, the transformer circuit may be connected to the direct current bus by using the combiner box, and the direct current bus is connected to the inverter.

With reference to the seventh possible implementation of the first aspect, in an eighth possible implementation, the power supply system may further include an on-grid and off-grid connection apparatus, and the inverter may be connected to the power grid by using the on-grid and off-grid connection apparatus.

In this application, the functional modules in the power supply system have various and flexible composition manners, and can adapt to different power supply environments, thereby improving diversity of application scenarios of the power supply system and enhancing adaptability of the power supply system.

According to a second aspect, this application provides a grid-connected control method. The grid-connected control method may apply to an inverter connected to a power grid, or apply to a controller of an inverter connected to a power grid, or apply to the power supply system according to the first aspect or any one of the possible implementations of the first aspect. The method includes: obtaining a harmonic current value of a grid-connected current at a grid-tied point; when the harmonic current value of the grid-connected current is greater than or equal to a target harmonic threshold, generating a current compensation signal based on the harmonic current value of the grid-connected current; and generating an inverter control signal based on the current compensation signal, and controlling, by using the inverter control signal, the inverter to output a harmonic compensation current to a load.

In an implementation provided in this application, the load may be included between a power supply in a power supply system and the grid-tied point connected to a power grid. Herein, the load may be a load whose voltage and current are in a non-linear relationship in a running (power supply or power consumption) process, such as a motor or a rectifier device. Herein, the power supply system (or the inverter or the controller of the inverter) may obtain the harmonic current value of the grid-connected current at the grid-tied point, and when the harmonic current value of the grid-connected current is greater than or equal to the target harmonic threshold, generate the current compensation signal based on the harmonic current value of the grid-connected current. Herein, the power supply system (or the inverter or the controller of the inverter) may obtain a current value of the grid-connected current at the grid-tied point, and perform signal processing (for example, a signal processing method such as discrete Fourier transform or fast Fourier transform), to obtain the harmonic current value of the grid-connected current. It can be understood that the target harmonic threshold herein may be a preset value, or may be a value determined by means of real-time calculation based on a running status or a system parameter of the power supply system. Further, it can be understood that the target harmonic threshold may be a plurality of values (for example, harmonics of different types (or different frequencies) correspond to different target harmonic thresholds), or may be one value (for example, statistical magnitude of harmonics of different types (or different frequencies) corresponds to one target harmonic threshold). The power supply system (or the inverter or the controller of the inverter) may generate the inverter control signal based on the current compensation signal, and control, by using the inverter control signal, the inverter to output the harmonic compensation current to the load. Herein, the power supply system (or the inverter or the controller of the inverter) may generate the current compensation signal based on the harmonic current value of the grid-connected current, and further may control, based on the current compensation signal generated by the power supply system (or the inverter or the controller of the inverter), the inverter to output the harmonic compensation current to the load. In addition, it can be understood that when the power supply system (or the inverter or the controller of the inverter) outputs the harmonic compensation current to the load, the inverter may simultaneously output a fundamental current to the grid-tied point (herein, the fundamental current may be a current output by the inverter to the grid-tied point after converting direct current energy of the power supply into alternating current energy). In other words, the power supply system (or the inverter or the controller of the inverter) may provide a harmonic current for the load by using the harmonic compensation current, so as to reduce interference caused by the load to the grid-connected current at the grid-tied point, reduce a harmonic component in the grid-connected current at the grid-tied point, and increase a sinusoidal degree of the grid-connected current at the grid-tied point.

According to the implementation provided in this application, when the harmonic current value of the grid-connected current at the grid-tied point is greater than or equal to the target harmonic threshold, the current compensation signal may be generated based on the harmonic current value of the grid-connected current. In addition, the inverter control signal is generated based on the current compensation signal, and the inverter control signal is used to control the inverter to output the harmonic compensation current to the load, so as to reduce the interference caused by the load to the grid-connected current at the grid-tied point, reduce the harmonic component in the grid-connected current at the grid-tied point, and increase the sinusoidal degree of the grid-connected current at the grid-tied point. A structure is simple, and a control method is convenient, thereby improving electric energy quality of the power supply system, prolonging a service life of a component, and reducing costs.

With reference to the second aspect, in a first possible implementation, the inverter may include a plurality of inverter circuits, and the controlling the inverter to output a harmonic compensation current to a load may include: controlling, by using the inverter control signal, a target inverter circuit in the inverter to output the harmonic compensation current to the load and stop outputting a fundamental current to the grid-tied point. Herein, the target inverter circuit is an inverter circuit that requires current compensation in the plurality of inverter circuits. When the target inverter circuit outputs the harmonic compensation current to the load, a non-target inverter circuit in the inverter is controlled to output a target fundamental current to the grid-tied point. Herein, a current value of the target fundamental current is a target fundamental current value. It can be understood that the inverter may include a plurality of inverter circuits. The plurality of inverter circuits may convert direct current energy of the power supply into alternating current energy, and output the alternating current energy to the grid-tied point in a form of a fundamental current. Herein, there may be one or more target inverter circuits (that is, an inverter circuit that outputs a harmonic compensation current to the load). The power supply system (or the inverter or the controller of the inverter) may determine, based on the current compensation signal, a quantity of inverter circuits that need to output a harmonic compensation current, and then determine the target inverter circuit in the inverter. In other words, the power supply system (or the inverter or the controller of the inverter) may determine an inverter circuit that requires current compensation in the plurality of inverter circuits of the inverter as the target inverter circuit. When controlling the target inverter circuit to output the harmonic compensation current to the load, the power supply system (or the inverter or the controller of the inverter) may control the target inverter circuit to stop outputting the fundamental current to the grid-tied point, and control the non-target inverter circuit to output the target fundamental current to the grid-tied point. Herein, the current value of the target fundamental current is the target fundamental current value. The target fundamental current value herein may be a preset value, or may be a value determined in real time based on a parameter of the power supply system, a quantity of target inverter circuits, and a quantity of non-target inverter circuits.

According to the implementation provided in this application, the inverter control signal may be used to control the target inverter circuit to output the harmonic compensation current to the load and stop outputting the fundamental current to the grid-tied point. In addition, when the target inverter circuit outputs the harmonic compensation current to the load, the non-target inverter circuit in the inverter may be controlled to output the target fundamental current to the grid-tied point, and when the target inverter circuit provides the harmonic current for the load, the non-target inverter circuit may be controlled to output the target fundamental current. In this way, the non-target inverter circuit can output the fundamental current to the grid-tied point, and supply energy to another linear load in the power supply system or the power grid. A structure is simple, and a control method is convenient, thereby further improving the electric energy quality of the power supply system.

With reference to the first possible implementation of the second aspect, in a second possible implementation, the generating a current compensation signal based on the harmonic current value of the grid-connected current may include: performing analysis on the harmonic current value of the grid-connected current to obtain a first compensation current value, and obtaining the first compensation current value based on the harmonic current value of the grid-connected current and the target harmonic threshold, to use the first compensation current value as the generated current compensation signal. Herein, the power supply system (or the inverter or the controller of the inverter) may obtain a current value of the grid-connected current at the grid-tied point, and perform signal processing (for example, a signal processing method such as discrete Fourier transform or fast Fourier transform), to obtain the harmonic current value of the grid-connected current. When the harmonic current value of the grid-connected current is greater than or equal to the target harmonic threshold, the first compensation current value may be obtained based on the harmonic current value of the grid-connected current and the target harmonic threshold (for example, a difference between the harmonic current value of the grid-connected current and the target harmonic threshold is obtained and used as the first compensation current value), and the first compensation current value is transmitted to the control module in real time as the current compensation signal, so as to control the inverter circuit in the inverter in real time to output the harmonic compensation current. It can be understood that the target harmonic threshold herein may be a preset value, or may be a value determined by means of real-time calculation based on a running status or a system parameter of the power supply system. Further, it can be understood that the target harmonic threshold may be a plurality of values (for example, harmonics of different types (or different frequencies) correspond to different target harmonic thresholds), or may be one value (for example, statistical magnitude of harmonics of different types (or different frequencies) corresponds to one target harmonic threshold). Furthermore, it can be understood that the first compensation current value herein may be a value obtained by collecting and combining compensation current values of a plurality of harmonics, or may be a plurality of values corresponding to compensation current values of a plurality of harmonics. According to the implementation provided in this application, the first compensation current value can be obtained in real time based on the harmonic current value of the grid-connected current and the target harmonic threshold, and the first compensation current value can be used as the current compensation signal, so as to control the inverter circuit in the inverter in real time to output the harmonic compensation current. A structure is simple, and a control method is convenient and flexible, thereby improving electric energy quality of the power supply system, prolonging a service life of a component, and reducing costs.

With reference to the first possible implementation of the second aspect, in a third possible implementation, the generating a current compensation signal based on the harmonic current value of the grid-connected current may include: when the harmonic current value of the grid-connected current is greater than or equal to the target harmonic threshold, obtaining a plurality of current values of the grid-connected current within a target detection time period, and performing analysis on the plurality of current values of the grid-connected current to obtain a harmonic order, a harmonic amplitude, and a harmonic phase of the grid-connected current in a case in which an amplitude of the grid-connected current is greater than or equal to the target harmonic threshold, to use the harmonic order, the harmonic amplitude, and the harmonic phase as a generated primary current compensation signal; and obtaining a phase of an output voltage of a target inverter circuit corresponding to an inverter collection module, and obtaining a second compensation current value based on the phase of the output voltage of the target inverter circuit and the primary current compensation signal, to use the second compensation current value as the generated current compensation signal. It can be understood that, when the harmonic current value of the grid-connected current is greater than or equal to the target harmonic threshold, the power supply system (or the inverter or the controller of the inverter) may obtain the plurality of current values of the grid-connected current within the target detection time period, and perform analysis (for example, a signal processing method such as discrete Fourier transform or fast Fourier transform) on the plurality of current values of the grid-connected current to obtain the harmonic order, the harmonic amplitude, and the harmonic phase of the grid-connected current in the case in which the amplitude of the grid-connected current is greater than or equal to the target harmonic threshold. The target detection time period herein may be a preset time period, or may be a time period such as a detection time period calculated based on a time interval between two adjacent detection time points and a quantity of times of detection. Further, it can be understood that, in some scenarios in which the power supply system (or the inverter or the controller of the inverter) cannot or does not need to perform real-time communication, the power supply system (or the inverter or the controller of the inverter) may transmit, to the inverter collection module as the primary current compensation signal, the harmonic order, the harmonic amplitude, and the harmonic phase of the grid-connected current in the case in which the amplitude of the grid-connected current is greater than or equal to the target harmonic threshold. Herein, when receiving the primary current compensation signal, the power supply system (or the inverter or the controller of the inverter) may obtain the phase of the output voltage of the target inverter circuit (for example, at a zero-crossing moment of the output voltage, determine that the phase of the output voltage is 0), and generate the second compensation current value based on the phase of the output voltage and the primary current compensation signal, to use the second compensation current value as the generated current compensation signal. Herein, because there is a time difference in a process in which the power supply system (or the inverter or the controller of the inverter) transmits the primary current compensation signal, the power supply system (or the inverter or the controller of the inverter) may generate the current compensation signal by using the phase of the output voltage of the target inverter circuit as a synchronization parameter, thereby improving consistency and synchronization performance of the harmonic compensation current output by the target inverter circuit.

According to the implementation provided in this application, in some scenarios in which the power supply system (or the inverter or the controller of the inverter) cannot or does not need to perform real-time communication, the harmonic order, the harmonic amplitude, and the harmonic phase of the grid-connected current in the case in which the amplitude of the grid-connected current is greater than or equal to the target harmonic threshold may be used as the primary current compensation signal. When receiving the primary current compensation signal, the phase of the output voltage of the target inverter circuit may be obtained (for example, at the zero-crossing moment of the output voltage, it is determined that the phase of the output voltage is 0), and the current compensation signal is generated by using the phase of the output voltage of the target inverter circuit as a synchronization parameter, thereby improving the consistency and the synchronization performance of the harmonic compensation current output by the target inverter circuit. A control method is convenient and flexible, an application scenario of the power supply system is further enriched, and electric energy quality of the power supply system is improved.

With reference to the second possible implementation or the third possible implementation of the second aspect, in a fourth possible implementation, the generating an inverter control signal based on the current compensation signal, and controlling, by using the inverter control signal, the inverter to output a harmonic compensation current to a load includes: inverting a phase of the current compensation signal to obtain a phase control signal; and generating the inverter control signal based on the current compensation signal and the phase control signal, and controlling, by using the inverter control signal, the target inverter circuit to output the harmonic compensation current to the load. Herein, a current value of the harmonic compensation current is a first compensation current value or a second compensation current value, and a phase of the harmonic compensation current is the same as a phase of the phase control signal. According to the implementation provided in this application, phase inversion may be performed on the current compensation signal to generate the phase control signal, and the inverter control signal (for example, a pulse width modulated signal or another control signal that can control an inverter circuit to output a current) may be generated based on the current compensation signal and the phase control signal, thereby further improving power supply efficiency of the power supply system. A structure is simple, and control is convenient.

### BRIEF DESCRIPTION OF DRAWINGS

FIG. 1 is a schematic diagram of an application scenario of a power supply system according to an embodiment of this application;
FIG. 2 is a schematic diagram of a structure of a power supply system according to an embodiment of this application;
FIG. 3 is a schematic diagram of another structure of a power supply system according to an embodiment of this application;
FIG. 4 is a schematic diagram of another structure of a power supply system according to an embodiment of this application;
FIG. 5 is a schematic diagram of another structure of a power supply system according to an embodiment of this application;
FIG. 6 is a schematic diagram of another structure of a power supply system according to an embodiment of this application;
FIG. 7 is a schematic diagram of another structure of a power supply system according to an embodiment of this application;
FIG. 8 is a schematic diagram of another structure of a power supply system according to an embodiment of this application;
FIG. 9 is a schematic flowchart of a grid-connected control method according to an embodiment of this application; and
FIG. 10 is another schematic flowchart of a grid-connected control method according to an embodiment of this application.

### DESCRIPTION OF EMBODIMENTS

A power supply system provided in this application may apply to a plurality of application fields, such as a new-energy smart microgrid field, a power transmission and distribution field or a new-energy field (for example, a photovoltaic grid connection field, a thermal power grid connection field, or a wind power grid connection field), a photovoltaic power generation field, a wind power generation field, a thermal power generation field, or a high-power converter field (for example, conversion of a direct current into a high-power high-voltage alternating current). This may be specifically determined based on an actual application scenario, and is not limited herein. The power supply system provided in this application may apply to power supply systems with different power generation apparatuses, such as a photovoltaic power supply system, a wind energy power supply system, a thermal power supply system, a nuclear energy power supply system, a chemical power supply system, or a biomass power supply system. This may be specifically determined based on an actual application scenario, and is not limited herein. The power supply system provided in this application may be adapted to different application scenarios, for example, an application scenario in which power is supplied to a load in a photovoltaic storage power supply environment, an application scenario in which power is supplied to a load in a wind energy storage power supply environment, an application scenario in which power is supplied to a load in a pure energy storage power supply environment, or another application scenario. The following uses the application scenario in which power is supplied to a load in a pure energy storage power supply environment as an example for description, and details are not described below again.

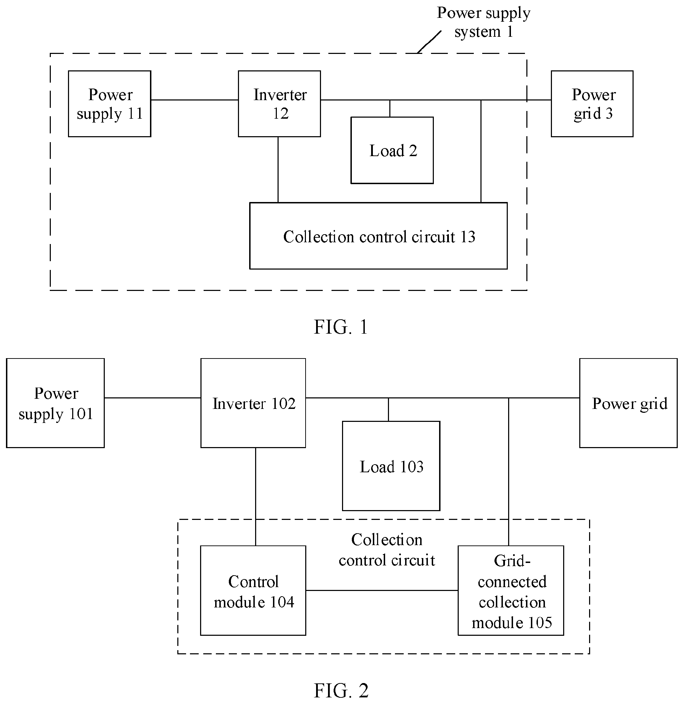

FIG. 1 is a schematic diagram of an application scenario of a power supply system according to an embodiment of this application. In an application scenario with pure energy storage power supply, as shown in FIG. 1, a power supply system 1 includes a power supply 11, an inverter 12, a collection control circuit 13, and a load 2. The power supply 11 may be connected to a power grid 3 by using the inverter 12, the load 2 and the power grid 3 may be connected at a grid-tied point, and the collection control circuit 13 may be connected to the grid-tied point and the inverter 12. In some feasible implementations, the power supply 11 may supply power to the power grid 3 by using the inverter 12. In some feasible implementations, the power supply 11 may also be used as an energy storage apparatus. When power is sufficient, the power supply 11 may obtain, by using the inverter 12, electric energy provided by the power grid 3 for storage. In this application, only an application scenario in which the power supply 11 supplies power to the power grid 3 by using the inverter 12 is used as an example for description, and details are not described below. It can be understood that, the power supply 11 provided in this application is applicable to application scenarios in which the power supply 11 supplies power to a plurality of types of powered devices, for example, supplies power to a base station device in a remote area with no mains supply or a poor mains supply, or supplies power to a storage battery, or supplies power to a household device (such as a refrigerator or an air conditioner). This may be specifically determined based on an actual application scenario, and is not limited herein. Further, it can be understood that the power grid 3 in FIG. 1 may include a powered device or a power transmission device, such as a transmission line, a power transit station, a storage battery, a communication base station, or a household device. The load 2 herein may include a load (a powered apparatus or a power transmission apparatus) whose voltage and current are in a non-linear relationship in a running (power supply or power consumption) process, such as a motor or a rectifier device. It can be understood that, because a voltage and a current that flow through the load 2 when the load 2 runs are in a non-linear relationship, a current harmonic may occur in a grid-connected current at the grid-tied point, and a sinusoidal degree of the grid-tied current is affected. Herein, the collection control circuit 13 may obtain a harmonic current value of the grid-connected current at the grid-tied point, and when the harmonic current value of the grid-connected current is greater than or equal to a target harmonic threshold, generate a current compensation signal based on the harmonic current value of the grid-connected current. In addition, the collection control circuit 13 may generate an inverter control signal based on the current compensation signal, and further control the inverter 12 to output a harmonic compensation current to the load 2, so as to reduce interference caused by the load 2 to the grid-connected current at the grid-tied point, reduce a harmonic component in the grid-connected current at the grid-tied point, and increase the sinusoidal degree of the grid-connected current at the grid-tied point, thereby improving electric energy quality of the power supply system, prolonging a service life of a component, and reducing costs.

The following provides an example description of the power supply system provided in this application and an operating principle of the power supply system with reference to FIG. 2 to FIG. 10.

FIG. 2 is a schematic diagram of a structure of a power supply system according to an embodiment of this application. As shown in FIG. 2, the power supply system includes a power supply 101, a collection control circuit, a load 103, and an inverter 102, and the collection control circuit includes a grid-connected collection module 105 and a control module 104. Herein, the power supply 101 may be connected to the load 103 by using the inverter 102, the load 103 and a power grid may be connected at a grid-tied point, an input terminal of the grid-connected collection module 105 may be connected to the grid-tied point, and an output terminal of the grid-connected collection module 105 may be connected to the inverter 102 by using the control module 104. Herein, the load 103 may be a load whose voltage and current are in a non-linear relationship in a running (power supply or power consumption) process, such as a motor or a rectifier device. The grid-connected collection module 105 herein may be configured to obtain a harmonic current value of a grid-connected current at the grid-tied point, and when the harmonic current value of the grid-connected current is greater than or equal to a target harmonic threshold, generate a current compensation signal based on the harmonic current value of the grid-connected current. The control module 104 herein may be configured to generate an inverter control signal based on the current compensation signal, and may control, by using the inverter control signal, the inverter 102 to output a harmonic compensation current to the load 103.

In an implementation provided in this application, the load 103 may be included between the power supply 101 in the power supply system and the grid-tied point connected to the power grid. Herein, the load 103 may be a load whose voltage and current are in a non-linear relationship in a running (power supply or power consumption) process, such as a motor or a rectifier device. In the power supply system, the grid-connected collection module 105 may be configured to obtain the harmonic current value of the grid-connected current at the grid-tied point, and when the harmonic current value of the grid-connected current is greater than or equal to the target harmonic threshold, generate the current compensation signal based on the harmonic current value of the grid-connected current. Herein, the grid-connected collection module 105 may obtain a current value of the grid-connected current at the grid-tied point, and perform signal processing (for example, a signal processing method such as discrete Fourier transform or fast Fourier transform), to obtain the harmonic current value of the grid-connected current. It can be understood that the target harmonic threshold herein may be a preset value, or may be a value determined by means of real-time calculation based on a running status or a system parameter of the power supply system. Further, it can be understood that the target harmonic threshold may be a plurality of values (for example, harmonics of different types (or different frequencies) correspond to different target harmonic thresholds), or may be one value (for example, statistical magnitude of harmonics of different types (or different frequencies) corresponds to one target harmonic threshold). The control module 104 may generate the inverter control signal based on the current compensation signal, and may control, by using the inverter control signal, the inverter 102 to output the harmonic compensation current to the load 103. Herein, the grid-connected collection module 105 may generate the current compensation signal based on the harmonic current value of the grid-connected current, and the control module 104 may control, based on the current compensation signal generated by the grid-connected collection module 105, the inverter 102 to output the harmonic compensation current to the load 103. In addition, it can be understood that when the control module 104 controls the inverter 102 to output the harmonic compensation current to the load 103, the inverter may simultaneously output a fundamental current to the grid-tied point (herein, the fundamental current may be a current output by the inverter 102 to the grid-tied point after converting direct current energy of the power supply 101 into alternating current energy). In other words, the control module 104 may control the inverter 102 to provide a harmonic current for the load 103 by using the harmonic compensation current, so as to reduce interference caused by the load 103 to the grid-connected current at the grid-tied point, reduce a harmonic component in the grid-connected current at the grid-tied point, and increase a sinusoidal degree of the grid-connected current at the grid-tied point.

According to the implementation provided in this application, when the harmonic current value of the grid-connected current at the grid-tied point is greater than or equal to the target harmonic threshold, the current compensation signal may be generated based on the harmonic current value of the grid-connected current. In addition, the inverter control signal is generated based on the current compensation signal, and the inverter control signal is used to control the inverter 102 to output the harmonic compensation current to the load 103, so as to reduce the interference caused by the load 103 to the grid-connected current at the grid-tied point, reduce the harmonic component in the grid-connected current at the grid-tied point, and increase the sinusoidal degree of the grid-connected current at the grid-tied point. A structure is simple, and a control method is convenient, thereby improving electric energy quality of the power supply system, prolonging a service life of a component, and reducing costs.

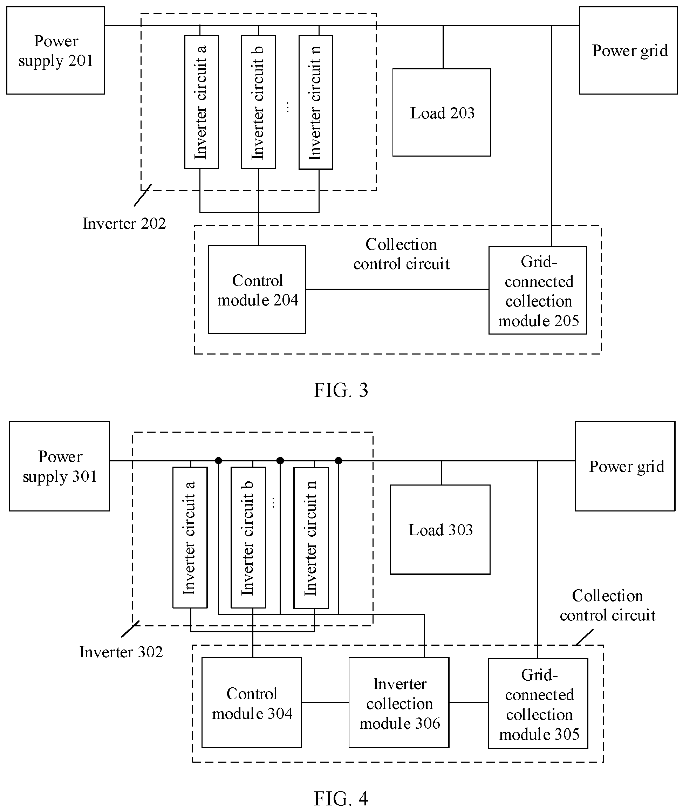

In some feasible implementations, the inverter may include a plurality of inverter circuits. For details, refer to FIG. 3. FIG. 3 is a schematic diagram of another structure of a power supply system according to an embodiment of this application. As shown in FIG. 3, an inverter 202 includes a plurality of inverter circuits (an inverter circuit a, an inverter circuit b, and an inverter circuit n). A control module 204 herein may be further configured to determine a target inverter circuit in the inverter 202 based on the inverter control signal, and control, by using the inverter control signal, the target inverter circuit in the inverter 202 to output the harmonic compensation current to a load 203 and stop outputting a fundamental current to the grid-tied point. The control module 204 herein may be further configured to: when the target inverter circuit outputs the harmonic compensation current to the load 203, control a non-target inverter circuit in the inverter 202 to output a target fundamental current to the grid-tied point, where a current value of the target fundamental current is a target fundamental current value. It can be understood that the inverter 202 may include a plurality of inverter circuits. The plurality of inverter circuits may convert direct current energy of a power supply 201 into alternating current energy, and output the alternating current energy to the grid-tied point in a form of a fundamental current. Herein, there may be one or more target inverter circuits (that is, an inverter circuit that outputs a harmonic compensation current to the load 203). The control module 204 may determine, based on the current compensation signal, a quantity of inverter circuits that need to output a harmonic compensation current, and then determine the target inverter circuit in the inverter 202. In other words, the control module 204 may determine an inverter circuit that requires current compensation in the plurality of inverter circuits of the inverter 202 as the target inverter circuit. When the control module 204 controls the target inverter circuit to output the harmonic compensation current to the load 203, the control module 204 may control the target inverter circuit to stop outputting the fundamental current to the grid-tied point, and control the non-target inverter circuit to output the target fundamental current to the grid-tied point. Herein, the current value of the target fundamental current is the target fundamental current value. The target fundamental current value herein may be a preset value, or may be a value determined in real time based on a parameter of the power supply system, a quantity of target inverter circuits, and a quantity of non-target inverter circuits.

According to the implementations provided in this application, the control module 204 may control, by using the inverter control signal, the target inverter circuit to output the harmonic compensation current to the load 203 and stop outputting the fundamental current to the grid-tied point. In addition, when the target inverter circuit outputs the harmonic compensation current to the load 203, the control module 204 may control the non-target inverter circuit in the inverter 202 to output the target fundamental current to the grid-tied point, and when the target inverter circuit provides a harmonic current for the load 203, control the non-target inverter circuit to output the target fundamental current. In this way, the non-target inverter circuit can output the fundamental current to the grid-tied point, and supply energy to another linear load in the power supply system or the power grid. A structure is simple, and a control method is convenient, thereby further improving the electric energy quality of the power supply system.

In some feasible implementations, the grid-connected collection module 205 may be further configured to: when the harmonic current value of the grid-connected current is greater than or equal to the target harmonic threshold, obtain a first compensation current value based on the harmonic current value of the grid-connected current and the target harmonic threshold, to use the first compensation current value as the generated current compensation signal. Herein, the grid-connected collection module 205 may obtain a current value of the grid-connected current at the grid-tied point, and perform signal processing (for example, a signal processing method such as discrete Fourier transform or fast Fourier transform), to obtain the harmonic current value of the grid-connected current. When the harmonic current value of the grid-connected current is greater than or equal to the target harmonic threshold, the grid-connected collection module 205 may obtain the first compensation current value based on the harmonic current value of the grid-connected current and the target harmonic threshold (for example, a difference between the harmonic current value of the grid-connected current and the target harmonic threshold is obtained and used as the first compensation current value), and transmit the first compensation current value to the control module 204 in real time as the current compensation signal, so as to control the inverter circuit in the inverter 202 in real time to output the harmonic compensation current. It can be understood that the target harmonic threshold herein may be a preset value, or may be a value determined by means of real-time calculation based on a running status or a system parameter of the power supply system. Further, it can be understood that the target harmonic threshold may be a plurality of values (for example, harmonics of different types (or different frequencies) correspond to different target harmonic thresholds), or may be one value (for example, statistical magnitude of harmonics of different types (or different frequencies) corresponds to one target harmonic threshold). Furthermore, it can be understood that the first compensation current value herein may be a value obtained by collecting and combining compensation current values of a plurality of harmonics, or may be a plurality of values corresponding to compensation current values of a plurality of harmonics.

According to the implementations provided in this application, the grid-connected collection module 205 can obtain the first compensation current value in real time based on the harmonic current value of the grid-connected current and the target harmonic threshold, and transmit the first compensation current value to the control module 204 as the current compensation signal, so as to control the inverter circuit in the inverter 202 in real time to output the harmonic compensation current. A structure is simple, and a control method is convenient and flexible, thereby improving electric energy quality of the power supply system, prolonging a service life of a component, and reducing costs.

In some feasible implementations, the collection control circuit may further include an inverter collection module. FIG. 4 is a schematic diagram of another structure of a power supply system according to an embodiment of this application. As shown in FIG. 4, herein, a grid-connected collection module 305 may be connected to a control module 304 by using an inverter collection module 306, a power supply 301 is connected to a load 303 by using an inverter 302, a connection point between each inverter circuit of the inverter 302 and the load 303 is an inverter connection point, the inverter collection module 306 may include a plurality of detection terminals, and each detection terminal of the inverter collection module 306 is correspondingly connected to the inverter connection point of each inverter circuit. The grid-connected collection module 305 herein may be further configured to: when the harmonic current value of the grid-connected current is greater than or equal to the target harmonic threshold, obtain a plurality of current values of the grid-connected current within a target detection time period, and perform analysis on the plurality of current values of the grid-connected current to obtain a harmonic order, a harmonic amplitude, and a harmonic phase of the grid-connected current in a case in which an amplitude of the grid-connected current is greater than or equal to the target harmonic threshold, to use the harmonic order, the harmonic amplitude, and the harmonic phase as a generated primary current compensation signal. The inverter collection module 306 herein may be configured to obtain a phase of an output voltage of a target inverter circuit corresponding to the inverter collection module 306, and obtain a second compensation current value based on the phase of the output voltage of the target inverter circuit and the primary current compensation signal, to use the second compensation current value as the generated current compensation signal. It can be understood that, when the harmonic current value of the grid-connected current is greater than or equal to the target harmonic threshold, the grid-connected collection module 305 may obtain the plurality of current values of the grid-connected current within the target detection time period, and perform analysis (for example, a signal processing method such as discrete Fourier transform or fast Fourier transform) on the plurality of current values of the grid-connected current to obtain the harmonic order, the harmonic amplitude, and the harmonic phase of the grid-connected current in the case in which the amplitude of the grid-connected current is greater than or equal to the target harmonic threshold. The target detection time period herein may be a preset time period, or may be a time period such as a detection time period calculated based on a time interval between two adjacent detection time points and a quantity of times of detection. Further, it can be understood that, in some scenarios in which the grid-connected collection module 305 and the control module 304 cannot or do not need to perform real-time communication, the grid-connected collection module 305 may transmit, to the inverter collection module 306 as the primary current compensation signal, the harmonic order, the harmonic amplitude, and the harmonic phase of the grid-connected current in the case in which the amplitude of the grid-connected current is greater than or equal to the target harmonic threshold. Herein, when receiving the primary current compensation signal, the inverter collection module 306 may obtain the phase of the output voltage of the target inverter circuit (for example, at a zero-crossing moment of the output voltage, determine that the phase of the output voltage is 0), and generate the second compensation current value based on the phase of the output voltage and the primary current compensation signal, to use the second compensation current value as the generated current compensation signal. Herein, because there is a time difference in a process in which the grid-connected collection module 305 transmits the primary current compensation signal to the inverter collection module 306, the inverter collection module 306 may generate the current compensation signal by using the phase of the output voltage of the target inverter circuit as a synchronization parameter, to ensure that the current compensation signal transmitted by the inverter collection module to the control module 304 is synchronous, thereby improving consistency and synchronization performance of the harmonic compensation current output by the target inverter circuit under control of the control module 304.

According to the implementations provided in this application, in some scenarios in which the grid-connected collection module 305 and the control module 304 cannot or do not need to perform real-time communication, the grid-connected collection module 305 may transmit, to the inverter collection module 306 as the primary current compensation signal, the harmonic order, the harmonic amplitude, and the harmonic phase of the grid-connected current in the case in which the amplitude of the grid-connected current is greater than or equal to the target harmonic threshold. When receiving the primary current compensation signal, the inverter collection module 306 may obtain the phase of the output voltage of the target inverter circuit (for example, at the zero-crossing moment of the output voltage, determine that the phase of the output voltage is 0), and generate the current compensation signal by using the phase of the output voltage of the target inverter circuit as a synchronization parameter, to ensure that the current compensation signal transmitted by the inverter collection module to the control module 304 is synchronous, thereby improving the consistency and the synchronization performance of the harmonic compensation current output by the target inverter circuit under control of the control module 304. A control method is convenient and flexible, an application scenario of the power supply system is further enriched, and electric energy quality of the power supply system is improved.

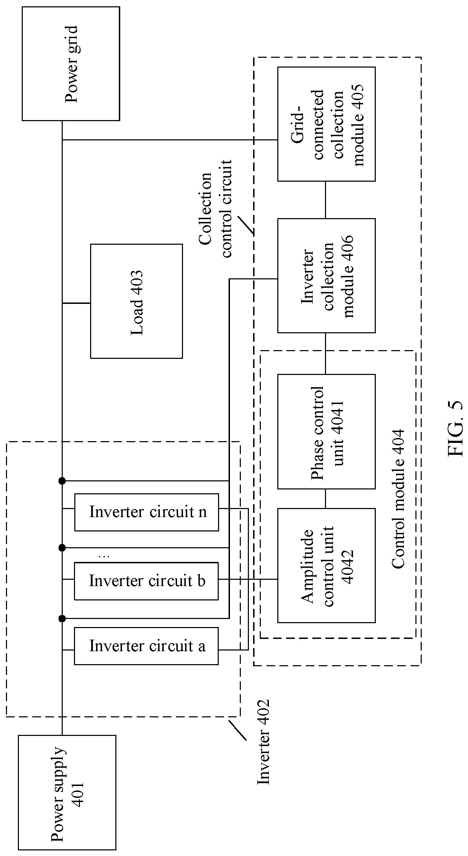

In some feasible implementations, the control module may include a phase control unit and an amplitude control unit. FIG. 5 is a schematic diagram of another structure of a power supply system according to an embodiment of this application. As shown in FIG. 5, a power supply 401 is connected to a load 403 by using an inverter 402, a grid-connected collection module 405 is connected to a phase control unit 4041, and the phase control unit 4041 may be connected to the inverter 402 by using an amplitude control unit 4042. The phase control unit 4041 herein may be configured to obtain the current compensation signal and perform phase inversion on the current compensation signal to generate a phase control signal. The amplitude control unit 4042 herein may be configured to generate the inverter control signal based on the current compensation signal and the phase control signal, and may control, by using the inverter control signal, the target inverter circuit in the inverter 402 to output the harmonic compensation current to the load 403. Herein, a current value of the harmonic compensation current is a first compensation current value or a second compensation current value, and a phase of the harmonic compensation current is the same as a phase of the phase control signal. According to the implementations provided in this application, the phase control unit 4041 may perform phase inversion on the current compensation signal to generate the phase control signal, and the amplitude control unit 4042 may generate the inverter control signal (for example, a pulse width modulated signal or another control signal that can control an inverter circuit to output a current) based on the current compensation signal and the phase control signal, thereby further improving power supply efficiency of the power supply system. A structure is simple, and control is convenient.

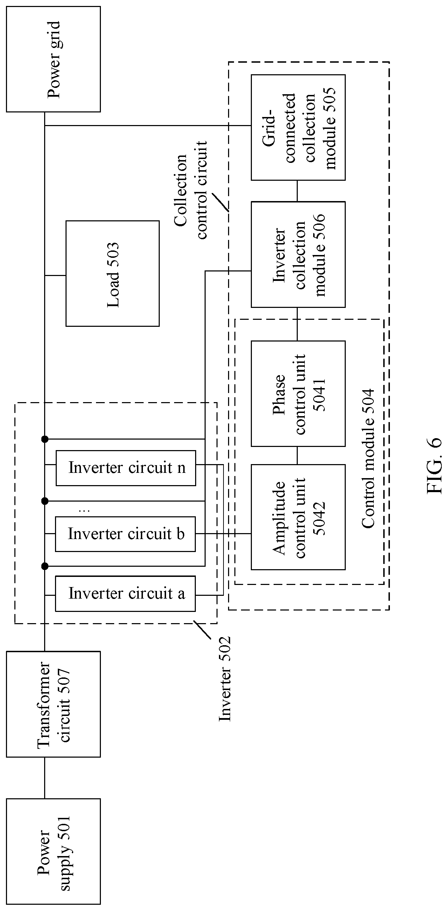

FIG. 6 is a schematic diagram of another structure of a power supply system according to an embodiment of this application. As shown in FIG. 6, the power supply system may further include a transformer circuit 507, and a power supply 501 may be connected to an inverter 502 by using the transformer circuit 507. The transformer circuit 507 herein may transform a voltage output by the power supply 501 into a voltage value that matches the inverter 502, and output electric energy obtained after voltage transformation to the inverter 502. The inverter 502 is used to convert the output direct current energy into alternating current energy and transmit the alternating current energy to a load, so that the system can supply power to a load of an alternating current powered device type on a power grid or a power grid side, thereby improving adaptability of the system. Connection manners and operating principles of the power supply 501, the inverter 502, a load 503, a control module 504 (including a phase control unit 5041 and an amplitude control unit 5042), a grid-connected collection module 505, and an inverter collection module 506 in FIG. 6 are the same as those of the power supply 401, the inverter 402, the load 403, the control module 404 (including the phase control unit 4041 and the amplitude control unit 4042), the grid-connected collection module 405, and the inverter collection module 406 in FIG. 5 above, and details are not described herein again.

In some feasible implementations, the power supply system may further include a direct current bus, and the transformer circuit 507 may be connected to the power grid by using the direct current bus and the inverter 502. Herein, the direct current bus may include one bus capacitor or a plurality of bus capacitors connected in series to each other, and may be configured to store energy. The direct current bus may include a bus capacitor C. The inverter 502 may convert electric energy that is output by the power supply 501 and stored at two terminals of the bus capacitor C, and output a corresponding current and voltage to maintain working of the power grid.

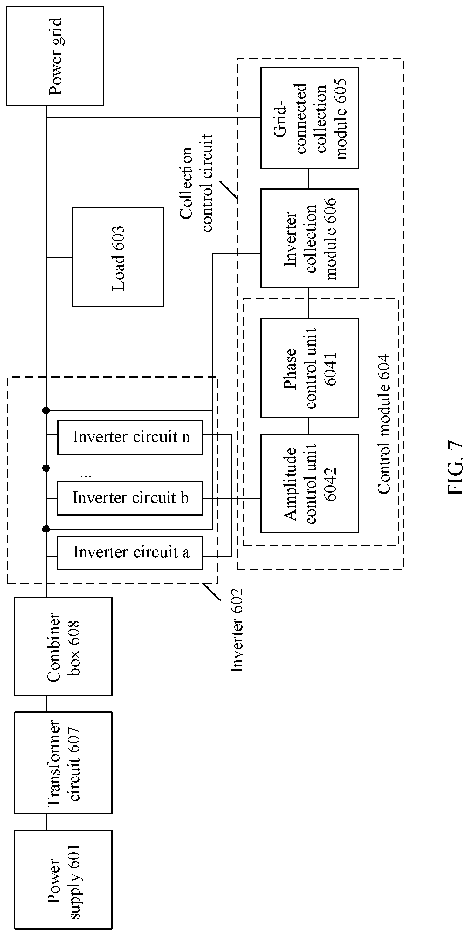

FIG. 7 is a schematic diagram of another structure of a power supply system according to an embodiment of this application. A power supply system shown in FIG. 7 may further include a combiner box 608, and a transformer circuit 607 in the power supply system may be connected to an inverter 602 by using the combiner box 608. It can be understood that, the transformer circuit 607 in the power supply system may be connected to the combiner box 608 and then directly connected to the inverter 602 by using the combiner box 608, or may be connected to a direct current bus by using the combiner box 608 and connected to the inverter 602 by using the direct current bus. This may be specifically specified according to an actual application scenario, and is not limited herein. Connection manners and operating principles of the power supply 601, the inverter 602, a load 603, a control module 604 (including a phase control unit 6041 and an amplitude control unit 6042), a grid-connected collection module 605, and an inverter collection module 606 in FIG. 7 are the same as those of the power supply 501, the inverter 502, the load 503, the control module 504 (including the phase control unit 5041 and the amplitude control unit 5042), the grid-connected collection module 505, and the inverter collection module 506 in FIG. 6 above, and details are not described herein again.

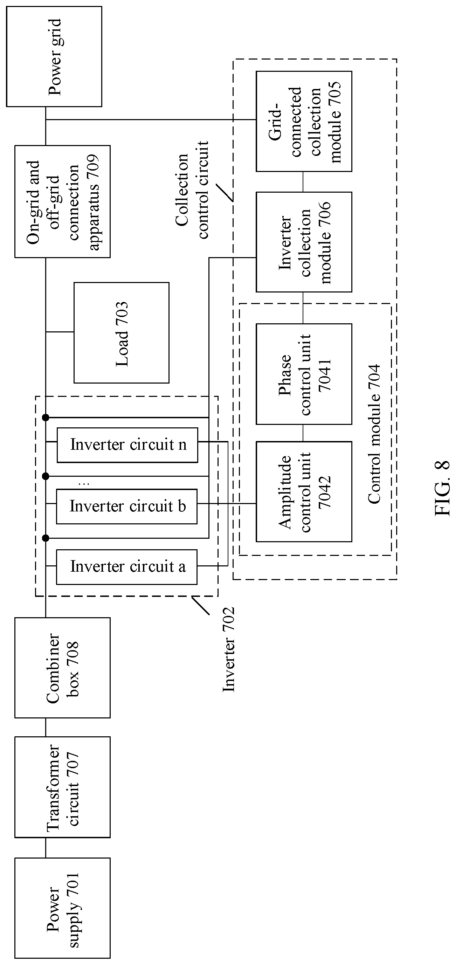

FIG. 8 is a schematic diagram of another structure of a power supply system according to an embodiment of this application. As shown in FIG. 8, a load of the power supply system may further include an on-grid and off-grid connection apparatus 709, and an inverter 702 may supply power to a powered device or a power transmission device such as a transmission line, a power transit station, a storage battery, a communication base station, or a household device in a power grid by using the on-grid and off-grid connection apparatus 709. Connection manners and operating principles of a power supply 701, the inverter 702, a load 703, a control module 704 (including a phase control unit 7041 and an amplitude control unit 7042), a grid-connected collection module 705, an inverter collection module 706, a transformer circuit 707, and a combiner box 708 in FIG. 8 are the same as those of the power supply 601, the inverter 602, the load 603, the control module 604 (including the phase control unit 6041 and the amplitude control unit 6042), the grid-connected collection module 605, the inverter collection module 606, the transformer circuit 607, and the combiner box 608 in FIG. 7 above, and details are not described herein again.

In this application, the functional modules in the power supply system have various and flexible composition manners, and can adapt to different power supply environments, thereby improving diversity of application scenarios of the power supply system and enhancing adaptability of the power supply system. In addition, in any one of the power supply systems shown in FIG. 1 to FIG. 8, or in another inverter for connecting to a power grid, or in a controller of another inverter connected to a power grid, the power supply system (or the inverter or the controller of the inverter) may provide a harmonic current for a load by using an inverter circuit in the power supply system (or the inverter), to increase a sinusoidal degree of a current at a grid-tied point, thereby improving electric energy quality of the power supply system, prolonging a service life of a component, and reducing costs. For ease of description, the following uses the structure of the power supply system shown in FIG. 2 as an example to describe a grid-connected control method provided in an embodiment of this application.

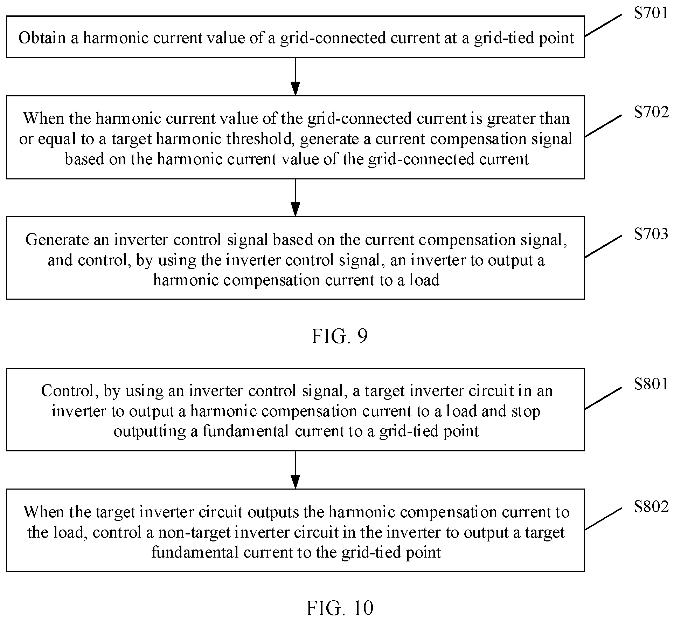

FIG. 9 is a schematic flowchart of a grid-connected control method according to this application. The grid-connected control method provided in this application applies to an inverter connected to a power grid, and also applies to any one of the power supply systems shown in FIG. 1 to FIG. 8. As shown in FIG. 9, the grid-connected control method provided in this application includes the following steps:
S701: Obtain a harmonic current value of a grid-connected current at a grid-tied point.
S702: When the harmonic current value of the grid-connected current is greater than or equal to a target harmonic threshold, generate a current compensation signal based on the harmonic current value of the grid-connected current.
S703: Generate an inverter control signal based on the current compensation signal, and control, by using the inverter control signal, the inverter to output a harmonic compensation current to a load.

In an implementation provided in this application, the load may be included between a power supply in a power supply system and the grid-tied point connected to a power grid. Herein, the load may be a load whose voltage and current are in a non-linear relationship in a running (power supply or power consumption) process, such as a motor or a rectifier device. Herein, the power supply system (or the inverter or the controller of the inverter) may obtain the harmonic current value of the grid-connected current at the grid-tied point, and when the harmonic current value of the grid-connected current is greater than or equal to the target harmonic threshold, generate the current compensation signal based on the harmonic current value of the grid-connected current. Herein, the power supply system (or the inverter or the controller of the inverter) may obtain a current value of the grid-connected current at the grid-tied point, and perform signal processing (for example, a signal processing method such as discrete Fourier transform or fast Fourier transform), to obtain the harmonic current value of the grid-connected current. It can be understood that the target harmonic threshold herein may be a preset value, or may be a value determined by means of real-time calculation based on a running status or a system parameter of the power supply system. Further, it can be understood that the target harmonic threshold may be a plurality of values (for example, harmonics of different types (or different frequencies) correspond to different target harmonic thresholds), or may be one value (for example, statistical magnitude of harmonics of different types (or different frequencies) corresponds to one target harmonic threshold). The power supply system (or the inverter or the controller of the inverter) may generate the inverter control signal based on the current compensation signal, and control, by using the inverter control signal, the inverter to output the harmonic compensation current to the load. Herein, the power supply system (or the inverter or the controller of the inverter) may generate the current compensation signal based on the harmonic current value of the grid-connected current, and further may control, based on the current compensation signal generated by a grid-connected collection module, the inverter to output the harmonic compensation current to the load. In addition, it can be understood that when the power supply system (or the inverter or the controller of the inverter) outputs the harmonic compensation current to the load, the inverter may simultaneously output a fundamental current to the grid-tied point (herein, the fundamental current may be a current output by the inverter to the grid-tied point after converting direct current energy of the power supply into alternating current energy). In other words, the power supply system (or the inverter or the controller of the inverter) may provide a harmonic current for the load by using the harmonic compensation current, so as to reduce interference caused by the load to the grid-connected current at the grid-tied point, reduce a harmonic component in the grid-connected current at the grid-tied point, and increase a sinusoidal degree of the grid-connected current at the grid-tied point.

According to the implementation provided in this application, when the harmonic current value of the grid-connected current at the grid-tied point is greater than or equal to the target harmonic threshold, the current compensation signal may be generated based on the harmonic current value of the grid-connected current. In addition, the inverter control signal is generated based on the current compensation signal, and the inverter control signal is used to control the inverter to output the harmonic compensation current to the load, so as to reduce the interference caused by the load to the grid-connected current at the grid-tied point, reduce the harmonic component in the grid-connected current at the grid-tied point, and increase the sinusoidal degree of the grid-connected current at the grid-tied point. A structure is simple, and a control method is convenient, thereby improving electric energy quality of the power supply system, prolonging a service life of a component, and reducing costs.

In some feasible implementations, the inverter may include a plurality of inverter circuits. The power supply system (or the inverter or the controller of the inverter) may separately control some inverter circuits (for example, a target inverter circuit) in the inverter to output a harmonic compensation current, and control some other inverter circuits (for example, a non-target inverter circuit) in the inverter to output a target fundamental current. FIG. 10 is a schematic flowchart of another grid-connected control method according to this application. As shown in FIG. 10, the controlling the inverter to output a harmonic compensation current to a load in step S703 above may include the following steps:
S801: Control, by using the inverter control signal, a target inverter circuit in the inverter to output the harmonic compensation current to the load and stop outputting a fundamental current to the grid-tied point.
S802: When the target inverter circuit outputs the harmonic compensation current to the load, control a non-target inverter circuit in the inverter to output a target fundamental current to the grid-tied point.

It can be understood that the inverter may include a plurality of inverter circuits. The plurality of inverter circuits may convert direct current energy of the power supply into alternating current energy, and output the alternating current energy to the grid-tied point in a form of a fundamental current. Herein, there may be one or more target inverter circuits (that is, an inverter circuit that outputs a harmonic compensation current to the load). The power supply system (or the inverter or the controller of the inverter) may determine, based on the current compensation signal, a quantity of inverter circuits that need to output a harmonic compensation current, and then determine the target inverter circuit in the inverter. In other words, the power supply system (or the inverter or the controller of the inverter) may determine an inverter circuit that requires current compensation in the plurality of inverter circuits of the inverter as the target inverter circuit. When controlling the target inverter circuit to output the harmonic compensation current to the load, the power supply system (or the inverter or the controller of the inverter) may control the target inverter circuit to stop outputting the fundamental current to the grid-tied point, and control the non-target inverter circuit to output the target fundamental current to the grid-tied point. Herein, the current value of the target fundamental current is the target fundamental current value. The target fundamental current value herein may be a preset value, or may be a value determined in real time based on a parameter of the power supply system, a quantity of target inverter circuits, and a quantity of non-target inverter circuits.

According to the implementation provided in this application, the inverter control signal may be used to control the target inverter circuit to output the harmonic compensation current to the load and stop outputting the fundamental current to the grid-tied point. In addition, when the target inverter circuit outputs the harmonic compensation current to the load, the non-target inverter circuit in the inverter may be controlled to output the target fundamental current to the grid-tied point, and when the target inverter circuit provides the harmonic current for the load, the non-target inverter circuit may be controlled to output the target fundamental current. In this way, the non-target inverter circuit can output the fundamental current to the grid-tied point, and supply energy to another linear load in the power supply system or the power grid. A structure is simple, and a control method is convenient, thereby further improving the electric energy quality of the power supply system.

In some feasible implementations, the generating a current compensation signal based on the harmonic current value of the grid-connected current in step S702 above may include: performing analysis on the harmonic current value of the grid-connected current to obtain a first compensation current value, and obtaining the first compensation current value based on the harmonic current value of the grid-connected current and the target harmonic threshold, to use the first compensation current value as the generated current compensation signal. Herein, the power supply system (or the inverter or the controller of the inverter) may obtain a current value of the grid-connected current at the grid-tied point, and perform signal processing (for example, a signal processing method such as discrete Fourier transform or fast Fourier transform), to obtain the harmonic current value of the grid-connected current. When the harmonic current value of the grid-connected current is greater than or equal to the target harmonic threshold, the first compensation current value may be obtained based on the harmonic current value of the grid-connected current and the target harmonic threshold (for example, a difference between the harmonic current value of the grid-connected current and the target harmonic threshold is obtained and used as the first compensation current value), and the first compensation current value is transmitted to the control module in real time as the current compensation signal, so as to control the inverter circuit in the inverter in real time to output the harmonic compensation current. It can be understood that the target harmonic threshold herein may be a preset value, or may be a value determined by means of real-time calculation based on a running status or a system parameter of the power supply system. Further, it can be understood that the target harmonic threshold may be a plurality of values (for example, harmonics of different types (or different frequencies) correspond to different target harmonic thresholds), or may be one value (for example, statistical magnitude of harmonics of different types (or different frequencies) corresponds to one target harmonic threshold). Furthermore, it can be understood that the first compensation current value herein may be a value obtained by collecting and combining compensation current values of a plurality of harmonics, or may be a plurality of values corresponding to compensation current values of a plurality of harmonics. According to the implementation provided in this application, the first compensation current value can be obtained in real time based on the harmonic current value of the grid-connected current and the target harmonic threshold, and the first compensation current value can be used as the current compensation signal, so as to control the inverter circuit in the inverter in real time to output the harmonic compensation current. A structure is simple, and a control method is convenient and flexible, thereby improving electric energy quality of the power supply system, prolonging a service life of a component, and reducing costs.

In some feasible implementations, the generating a current compensation signal based on the harmonic current value of the grid-connected current in step S702 above may include: when the harmonic current value of the grid-connected current is greater than or equal to the target harmonic threshold, obtaining a plurality of current values of the grid-connected current within a target detection time period, and performing analysis on the plurality of current values of the grid-connected current to obtain a harmonic order, a harmonic amplitude, and a harmonic phase of the grid-connected current in a case in which an amplitude of the grid-connected current is greater than or equal to the target harmonic threshold, to use the harmonic order, the harmonic amplitude, and the harmonic phase as a generated primary current compensation signal; and obtaining a phase of an output voltage of a target inverter circuit corresponding to an inverter collection module, and obtaining a second compensation current value based on the phase of the output voltage of the target inverter circuit and the primary current compensation signal, to use the second compensation current value as the generated current compensation signal. It can be understood that, when the harmonic current value of the grid-connected current is greater than or equal to the target harmonic threshold, the power supply system (or the inverter or the controller of the inverter) may obtain the plurality of current values of the grid-connected current within the target detection time period, and perform analysis (for example, a signal processing method such as discrete Fourier transform or fast Fourier transform) on the plurality of current values of the grid-connected current to obtain the harmonic order, the harmonic amplitude, and the harmonic phase of the grid-connected current in the case in which the amplitude of the grid-connected current is greater than or equal to the target harmonic threshold. The target detection time period herein may be a preset time period, or may be a time period such as a detection time period calculated based on a time interval between two adjacent detection time points and a quantity of times of detection. Further, it can be understood that, in some scenarios in which the power supply system (or the inverter or the controller of the inverter) cannot or does not need to perform real-time communication, the power supply system (or the inverter or the controller of the inverter) may transmit, to the inverter collection module as the primary current compensation signal, the harmonic order, the harmonic amplitude, and the harmonic phase of the grid-connected current in the case in which the amplitude of the grid-connected current is greater than or equal to the target harmonic threshold. Herein, when receiving the primary current compensation signal, the power supply system (or the inverter or the controller of the inverter) may obtain the phase of the output voltage of the target inverter circuit (for example, at a zero-crossing moment of the output voltage, determine that the phase of the output voltage is 0), and generate the second compensation current value based on the phase of the output voltage and the primary current compensation signal, to use the second compensation current value as the generated current compensation signal. Herein, because there is a time difference in a process in which the power supply system (or the inverter or the controller of the inverter) transmits the primary current compensation signal, the power supply system (or the inverter or the controller of the inverter) may generate the current compensation signal by using the phase of the output voltage of the target inverter circuit as a synchronization parameter, thereby improving consistency and synchronization performance of the harmonic compensation current output by the target inverter circuit.

According to the implementation provided in this application, in some scenarios in which the power supply system (or the inverter or the controller of the inverter) cannot or does not need to perform real-time communication, the harmonic order, the harmonic amplitude, and the harmonic phase of the grid-connected current in the case in which the amplitude of the grid-connected current is greater than or equal to the target harmonic threshold may be used as the primary current compensation signal. When receiving the primary current compensation signal, the phase of the output voltage of the target inverter circuit may be obtained (for example, at the zero-crossing moment of the output voltage, it is determined that the phase of the output voltage is 0), and the current compensation signal is generated by using the phase of the output voltage of the target inverter circuit as a synchronization parameter, thereby improving the consistency and the synchronization performance of the harmonic compensation current output by the target inverter circuit. A control method is convenient and flexible, an application scenario of the power supply system is further enriched, and electric energy quality of the power supply system is improved.

In some feasible implementations, the generating an inverter control signal based on the current compensation signal, and controlling, by using the inverter control signal, the invertor to output a harmonic compensation current to a load in step S703 above includes: inverting a phase of the current compensation signal to obtain a phase control signal; and generating the inverter control signal based on the current compensation signal and the phase control signal, and controlling, by using the inverter control signal, the target inverter circuit to output the harmonic compensation current to the load. Herein, a current value of the harmonic compensation current is a first compensation current value or a second compensation current value, and a phase of the harmonic compensation current is the same as a phase of the phase control signal. According to the implementation provided in this application, phase inversion may be performed on the current compensation signal to generate the phase control signal, and the inverter control signal (for example, a pulse width modulated signal or another control signal that can control an inverter circuit to output a current) may be generated based on the current compensation signal and the phase control signal, thereby further improving power supply efficiency of the power supply system. A structure is simple, and control is convenient.

In this application, according to the implementation provided in this application, when the harmonic current value of the grid-connected current at the grid-tied point is greater than or equal to the target harmonic threshold, the current compensation signal may be generated based on the harmonic current value of the grid-connected current. In addition, the inverter control signal is generated based on the current compensation signal, and the inverter control signal is used to control the inverter to output the harmonic compensation current to the load, so as to reduce interference caused by the load to the grid-connected current at the grid-tied point, reduce a harmonic component in the grid-connected current at the grid-tied point, and increase a sinusoidal degree of the grid-connected current at the grid-tied point. A structure is simple, and a control method is convenient, thereby improving electric energy quality of the power supply system, prolonging a service life of a component, and reducing costs.

The foregoing descriptions are merely specific implementations of this application, and are not intended to limit the protection scope of this application. The modifications or replacements readily figured out by a person skilled in the art within the technical scope disclosed in this application should all fall within the protection scope of this application. Therefore, the protection scope of this application shall be subject to the protection scope of the claims.

## Claims

1. A power supply system (1), wherein the power supply system comprises a power supply (11), a collection control circuit (13), a load (2), and an inverter (12), and the collection control circuit comprises a grid-connected collection module (105) and a control module (104);
the power supply is connected to the load by using the inverter, the load and a power grid are connected at a grid-tied point, an input terminal of the grid-connected collection module is connected to the grid-tied point, and an output terminal of the grid-connected collection module is connected to the inverter by using the control module;
the grid-connected collection module is configured to obtain a harmonic current value of a grid-connected current at the grid-tied point, and when the harmonic current value of the grid-connected current is greater than or equal to a target harmonic threshold, generate a current compensation signal based on the harmonic current value of the grid-connected current; and
the control module is configured to generate an inverter control signal based on the current compensation signal, and control, by using the inverter control signal, the inverter to output a harmonic compensation current to the load;
**characterised in that**:
the inverter comprises a plurality of inverter circuits (a, b, c), and the plurality of inverter circuits are connected in parallel; and the control module is further configured to control, by using the inverter control signal, a target inverter circuit configured to output the harmonic compensation current to the load and stop outputting a fundamental current to the grid-tied point, wherein the target inverter circuit is an inverter circuit that being configured to require compensation in the plurality of inverter circuits; and
the control module is further configured to: when the target inverter circuit outputs the harmonic compensation current to the load, control a non-target inverter circuit in the inverter to output a target fundamental current to the grid-tied point, wherein a current value of the target fundamental current is a target fundamental current value.

2. The power supply system according to claim 1, wherein the grid-connected collection module is further configured to: when the harmonic current value of the grid-connected current is greater than or equal to the target harmonic threshold, obtain a first compensation current value based on the harmonic current value of the grid-connected current and the target harmonic threshold, to use the first compensation current value as the generated current compensation signal.

3. The power supply system according to claim 1, wherein the collection control circuit further comprises an inverter collection module (306);
the grid-connected collection module is connected to the control module by using the inverter collection module, a connection point between each inverter circuit of the inverter and the load is an inverter connection point, the inverter collection module comprises a plurality of detection terminals, and each detection terminal of the inverter collection module is correspondingly connected to the inverter connection point of each inverter circuit;
the grid-connected collection module is further configured to: when the harmonic current value of the grid-connected current is greater than or equal to the target harmonic threshold, obtain a plurality of current values of the grid-connected current within a target detection time period, and perform analysis on the plurality of current values of the grid-connected current to obtain a harmonic order, a harmonic amplitude, and a harmonic phase of the grid-connected current in a case in which an amplitude of the grid-connected current is greater than or equal to the target harmonic threshold, to use the harmonic order, the harmonic amplitude, and the harmonic phase as a generated primary current compensation signal; and
the inverter collection module is configured to obtain a phase of an output voltage of the target inverter circuit corresponding to the inverter collection module, and obtain a second compensation current value based on the phase of the output voltage of the target inverter circuit and the primary current compensation signal, to use the second compensation current value as the generated current compensation signal.

4. The power supply system according to claim 2 or 3, wherein the control module comprises a phase control unit (4041) and an amplitude control unit (4042);
the grid-connected collection module is connected to the phase control unit, and the phase control unit is connected to the inverter by using the amplitude control unit;
the phase control unit is configured to obtain the current compensation signal and perform phase inversion on the current compensation signal to generate a phase control signal; and
the amplitude control unit is configured to generate the inverter control signal based on the generated current compensation signal and the phase control signal, and control, by using the inverter control signal, the target inverter circuit in the inverter to output the harmonic compensation current to the load, wherein a current value of the harmonic compensation current is the first compensation current value or the second compensation current value, and a phase of the harmonic compensation current is the same as a phase of the phase control signal.

5. The power supply system according to claim 4, wherein the power supply system further comprises a transformer circuit (507), and the power supply is connected to the inverter by using the transformer circuit.

6. The power supply system according to claim 5, wherein the power supply system further comprises a combiner box (608), and the transformer circuit is connected to the inverter by using the combiner box.

7. The power supply system according to claim 6, wherein the power supply system further comprises a direct current bus, the transformer circuit is connected to the direct current bus by using the combiner box, and the direct current bus is connected to the inverter.

8. The power supply system according to claim 7, wherein the power supply system further comprises an on-grid and off-grid connection apparatus (709), and the inverter is connected to the power grid by using the on-grid and off-grid connection apparatus.

9. A grid-connected control method, applied to an inverter (12) connected to a power grid (3), wherein the method comprises:
obtaining (S701) a harmonic current value of a grid-connected current at a grid-tied point of the inverter;
when the harmonic current value of the grid-connected current is greater than or equal to a target harmonic threshold, generating (S702) a current compensation signal based on the harmonic current value of the grid-connected current; and
generating (S702) an inverter control signal based on the current compensation signal, and controlling, by using the inverter control signal, the inverter to output a harmonic compensation current to a load;
**characterised in that**:
the inverter comprises a plurality of inverter circuits (a, b, c), and the controlling the inverter to output the harmonic compensation current to the load comprises:
controlling (S801), by using the inverter control signal, a target inverter circuit to output the harmonic compensation current to the load and stopping outputting a fundamental current to the grid-tied point, wherein the target inverter circuit is an inverter circuit that requires compensation in the plurality of inverter circuits; and
when the target inverter circuit outputs the harmonic compensation current to the load, controlling (S802) a non-target inverter circuit in the inverter to output a target fundamental current to the grid-tied point, wherein a current value of the target fundamental current is a target fundamental current value.

10. The grid-connected control method according to claim 9, wherein the generating a current compensation signal based on the harmonic current value of the grid-connected current comprises:
performing analysis on the harmonic current value of the grid-connected current to obtain a first compensation current value, and obtaining the first compensation current value based on the harmonic current value of the grid-connected current and the target harmonic threshold, to use the first compensation current value as the generated current compensation signal.

11. The grid-connected control method according to claim 9, wherein the generating a current compensation signal based on the harmonic current value of the grid-connected current comprises:
when the harmonic current value of the grid-connected current is greater than or equal to the target harmonic threshold, obtaining a plurality of current values of the grid-connected current within a target detection time period, and performing analysis on the plurality of current values of the grid-connected current to obtain a harmonic order, a harmonic amplitude, and a harmonic phase of the grid-connected current in a case in which an amplitude of the grid-connected current is greater than or equal to the target harmonic threshold, to use the harmonic order, the harmonic amplitude, and the harmonic phase as a generated primary current compensation signal; and
obtaining a phase of an output voltage of the target inverter circuit corresponding to an inverter collection module, and obtaining a second compensation current value based on the phase of the output voltage of the target inverter circuit and the primary current compensation signal, to use the second compensation current value as the generated current compensation signal.

12. The grid-connected control method according to claim 10 or 11, wherein the generating an inverter control signal based on the current compensation signal, and controlling, by using the inverter control signal, the target inverter circuit to output the harmonic compensation current to the load comprises:
inverting a phase of the current compensation signal to obtain a phase control signal; and
generating the inverter control signal based on the current compensation signal and the phase control signal, and controlling, by using the inverter control signal, the target inverter circuit to output the harmonic compensation current to the load, wherein a current value of the harmonic compensation current is a first compensation current value or a second compensation current value, and a phase of the harmonic compensation current is the same as a phase of the phase control signal.

## Patentansprüche

1. Energieversorgungssystem (1), wobei das Energieversorgungssystem eine Energieversorgung (11), eine Erfassungssteuerschaltung (13), eine Last (2) und einen Wechselrichter (12) umfasst, und die Erfassungssteuerschaltung ein netzgekoppeltes Erfassungsmodul (105) und ein Steuermodul (104) umfasst;
die Energieversorgung unter Verwendung des Wechselrichters mit der Last gekoppelt ist, die Last und ein Energienetz an einem netzgebundenen Punkt gekoppelt sind, ein Eingangsanschluss des netzgekoppelten Erfassungsmoduls mit dem netzgebundenen Punkt gekoppelt ist, und ein Ausgangsanschluss des netzgekoppelten Erfassungsmoduls unter Verwendung des Steuermoduls mit dem Wechselrichter gekoppelt ist;
das netzgekoppelte Erfassungsmodul dazu konfiguriert ist, einen Oberschwingungsstromwert eines netzgekoppelten Stroms an dem netzgebundenen Punkt zu erhalten, und wenn der Oberschwingungsstromwert des netzgekoppelten Stroms größer als oder gleich einem Ziel-Oberschwingungsschwellenwert ist, ein Stromkompensationssignal basierend auf dem Oberschwingungsstromwert des netzgekoppelten Stroms zu erzeugen; und
das Steuermodul dazu konfiguriert ist, ein Wechselrichtersteuersignal basierend auf dem Stromkompensationssignal zu erzeugen, und unter Verwendung des Wechselrichtersteuersignals den Wechselrichter so zu steuern, dass er einen Oberschwingungskompensationsstrom an die Last ausgibt;
**dadurch gekennzeichnet, dass**:
der Wechselrichter eine Mehrzahl von Wechselrichterschaltungen (a, b, c) umfasst und die Mehrzahl von Wechselrichterschaltungen parallel gekoppelt ist; und das Steuermodul ferner dazu konfiguriert ist, unter Verwendung des Wechselrichtersteuersignals eine Ziel-Wechselrichterschaltung zu steuern, die dazu konfiguriert ist, den Oberschwingungskompensationsstrom an die Last auszugeben und ein Ausgeben eines Grundschwingungsstroms an den netzgebundenen Punkt zu stoppen, wobei die Ziel-Wechselrichterschaltung eine Wechselrichterschaltung ist, die dazu konfiguriert ist, eine Kompensation in der Mehrzahl von Wechselrichterschaltungen zu erfordern; und
das Steuermodul ferner zu Folgendem konfiguriert ist: wenn die Ziel-Wechselrichterschaltung den Oberschwingungskompensationsstrom an die Last ausgibt, Steuern einer Nicht-Ziel-Wechselrichterschaltung in dem Wechselrichter so, dass sie einen Ziel-Grundschwingungsstrom an den netzgebundenen Punkt ausgibt, wobei ein Stromwert des Ziel-Grundschwingungsstroms ein Ziel-Grundschwingungsstromwert ist.

2. Energieversorgungssystem nach Anspruch 1, wobei das netzgekoppelte Erfassungsmodul ferner zu Folgendem konfiguriert ist: wenn der Oberschwingungsstromwert des netzgekoppelten Stroms größer als der oder gleich dem Ziel-Oberschwingungsschwellenwert ist, Erhalten eines ersten Kompensationsstromwerts basierend auf dem Oberschwingungsstromwert des netzgekoppelten Stroms und dem Ziel-Oberschwingungsschwellenwert, um den ersten Kompensationsstromwert als das erzeugte Stromkompensationssignal zu verwenden.

3. Energieversorgungssystem nach Anspruch 1, wobei die Erfassungssteuerschaltung ferner ein Wechselrichtererfassungsmodul (306) umfasst;
das netzgekoppelte Erfassungsmodul unter Verwendung des Wechselrichtererfassungsmoduls mit dem Steuermodul gekoppelt ist, ein Kopplungspunkt zwischen jeder Wechselrichterschaltung des Wechselrichters und der Last ein Wechselrichterkopplungspunkt ist, das Wechselrichtererfassungsmodul eine Mehrzahl von Detektionsanschlüssen umfasst und jeder Detektionsanschluss des Wechselrichtererfassungsmoduls entsprechend mit dem Wechselrichterkopplungspunkt jeder Wechselrichterschaltung gekoppelt ist;
das netzgekoppelte Erfassungsmodul ferner zu Folgendem konfiguriert ist: wenn der Oberschwingungsstromwert des netzgekoppelten Stroms größer als der oder gleich dem Ziel-Oberschwingungsschwellenwert ist, Erhalten einer Mehrzahl von Stromwerten des netzgekoppelten Stroms innerhalb eines Ziel-Detektionszeitraums und Durchführen einer Analyse an der Mehrzahl von Stromwerten des netzgekoppelten Stroms, um eine Oberschwingungsordnungszahl, eine Oberschwingungsamplitude und eine Oberschwingungsphase des netzgekoppelten Stroms in einem Fall zu erhalten, in dem eine Amplitude des netzgekoppelten Stroms größer als der oder gleich dem Ziel-Oberschwingungsschwellenwert ist, um die Oberschwingungsordnungszahl, die Oberschwingungsamplitude und die Oberschwingungsphase als ein erzeugtes Primärstromkompensationssignal zu verwenden; und
das Wechselrichtererfassungsmodul dazu konfiguriert ist, eine Phase einer Ausgangsspannung der Ziel-Wechselrichterschaltung zu erhalten, die dem Wechselrichtererfassungsmodul entspricht, und einen zweiten Kompensationsstromwert basierend auf der Phase der Ausgangsspannung der Ziel-Wechselrichterschaltung und dem Primärstromkompensationssignal zu erhalten, um den zweiten Kompensationsstromwert als das erzeugte Stromkompensationssignal zu verwenden.

4. Energieversorgungssystem nach Anspruch 2 oder 3, wobei das Steuermodul eine Phasensteuereinheit (4041) und eine Amplitudensteuereinheit (4042) umfasst;
das netzgekoppelte Erfassungsmodul mit der Phasensteuereinheit gekoppelt ist, und die Phasensteuereinheit unter Verwendung der Amplitudensteuereinheit mit dem Wechselrichter gekoppelt ist;
die Phasensteuereinheit dazu konfiguriert ist, das Stromkompensationssignal zu erhalten und eine Phasenumkehr an dem Stromkompensationssignal durchzuführen, um ein Phasensteuersignal zu erzeugen; und
die Amplitudensteuereinheit dazu konfiguriert ist, das Wechselrichtersteuersignal basierend auf dem erzeugten Stromkompensationssignal und dem Phasensteuersignal zu erzeugen und unter Verwendung des Wechselrichtersteuersignals die Ziel-Wechselrichterschaltung in dem Wechselrichter so zu steuern, dass sie den Oberschwingungskompensationsstrom an die Last ausgibt, wobei ein Stromwert des Oberschwingungskompensationsstroms der erste Kompensationsstromwert oder der zweite Kompensationsstromwert ist und eine Phase des Oberschwingungskompensationsstroms dieselbe wie eine Phase des Phasensteuersignals ist.

5. Energieversorgungssystem nach Anspruch 4, wobei das Energieversorgungssystem ferner eine Transformatorschaltung (507) umfasst und die Energieversorgung unter Verwendung der Transformatorschaltung mit dem Wechselrichter gekoppelt ist.

6. Energieversorgungssystem nach Anspruch 5, wobei das Energieversorgungssystem ferner einen Kombinatorkasten (608) umfasst und die Transformatorschaltung unter Verwendung des Kombinatorkastens mit dem Wechselrichter gekoppelt ist.

7. Energieversorgungssystem nach Anspruch 6, wobei das Energieversorgungssystem ferner einen Gleichstrombus umfasst, die Transformatorschaltung unter Verwendung des Kombinatorkastens mit dem Gleichstrombus gekoppelt ist und der Gleichstrombus mit dem Wechselrichter gekoppelt ist.

8. Energieversorgungssystem nach Anspruch 7, wobei das Energieversorgungssystem ferner eine netzabhängige und netzunabhängige Kopplungsvorrichtung (709) umfasst, und der Wechselrichter unter Verwendung der netzabhängigen und netzunabhängigen Kopplungsvorrichtung mit dem Energienetz gekoppelt ist.

9. Netzgekoppeltes Steuerverfahren, das auf einen Wechselrichter (12) angewendet wird, der mit einem Energienetz (3) gekoppelt ist, wobei das Verfahren Folgendes umfasst:
Erhalten (S701) eines Oberschwingungsstromwerts eines netzgekoppelten Stroms an einem netzgebundenen Punkt des Wechselrichters;
wenn der Oberschwingungsstromwert des netzgekoppelten Stroms größer als ein oder gleich einem Ziel-Oberschwingungsschwellenwert ist, Erzeugen (S702) eines Stromkompensationssignals basierend auf dem Oberschwingungsstromwert des netzgekoppelten Stroms; und
Erzeugen (S702) eines Wechselrichtersteuersignals basierend auf dem Stromkompensationssignal und Steuern, unter Verwendung des Wechselrichtersteuersignals, des Wechselrichters so, dass er einen Oberschwingungskompensationsstrom an eine Last ausgibt;
**dadurch gekennzeichnet, dass**:
der Wechselrichter eine Mehrzahl von Wechselrichterschaltungen (a, b, c) umfasst, und das Steuern des Wechselrichters so, dass er einen Oberschwingungskompensationsstrom an die Last ausgibt, Folgendes umfasst:
Steuern (S801), unter Verwendung des Wechselrichtersteuersignals, einer Ziel-Wechselrichterschaltung so, dass sie den Oberschwingungskompensationsstrom an die Last ausgibt, und Stoppen eines Ausgebens eines Grundschwingungsstroms an den netzgebundenen Punkt, wobei die Ziel-Wechselrichterschaltung eine Wechselrichterschaltung ist, die eine Kompensation in der Mehrzahl von Wechselrichterschaltungen erfordert; und,
wenn die Ziel-Wechselrichterschaltung den Oberschwingungskompensationsstrom an die Last ausgibt, Steuern (S802) einer Nicht-Ziel-Wechselrichterschaltung in dem Wechselrichter so, dass sie einen Ziel-Grundschwingungsstrom an den netzgebundenen Punkt ausgibt, wobei ein Stromwert des Ziel-Grundschwingungsstroms ein Ziel-Grundschwingungsstromwert ist.

10. Netzgekoppeltes Steuerverfahren nach Anspruch 9, wobei das Erzeugen eines Stromkompensationssignals basierend auf dem Oberschwingungsstromwert des netzgekoppelten Stroms Folgendes umfasst:
Durchführen einer Analyse an dem Oberschwingungsstromwert des netzgekoppelten Stroms, um einen ersten Kompensationsstromwert zu erhalten, und Erhalten des ersten Kompensationsstromwerts basierend auf dem Oberschwingungsstromwert des netzgekoppelten Stroms und dem Ziel-Oberschwingungsschwellenwert, um den ersten Kompensationsstromwert als das erzeugte Stromkompensationssignal zu verwenden.

11. Netzgekoppeltes Steuerverfahren nach Anspruch 9, wobei das Erzeugen eines Stromkompensationssignals basierend auf dem Oberschwingungsstromwert des netzgekoppelten Stroms Folgendes umfasst:
wenn der Oberschwingungsstromwert des netzgekoppelten Stroms größer als der oder gleich dem Ziel-Oberschwingungsschwellenwert ist, Erhalten einer Mehrzahl von Stromwerten des netzgekoppelten Stroms innerhalb eines Ziel-Detektionszeitraums, und Durchführen einer Analyse an der Mehrzahl von Stromwerten des netzgekoppelten Stroms, um eine Oberschwingungsordnungszahl, eine Oberschwingungsamplitude und eine Oberschwingungsphase des netzgekoppelten Stroms in einem Fall zu erhalten, in dem eine Amplitude des netzgekoppelten Stroms größer als der oder gleich dem Ziel-Oberschwingungsschwellenwert ist, um die Oberschwingungsordnungszahl, die Oberschwingungsamplitude und die Oberschwingungsphase als ein erzeugtes Primärstromkompensationssignal zu verwenden; und
Erhalten einer Phase einer Ausgangsspannung der Ziel-Wechselrichterschaltung, die einem Wechselrichtererfassungsmodul entspricht, und Erhalten eines zweiten Kompensationsstromwerts basierend auf der Phase der Ausgangsspannung der Ziel-Wechselrichterschaltung und dem Primärstromkompensationssignal, um den zweiten Kompensationsstromwert als das erzeugte Stromkompensationssignal zu verwenden.

12. Netzgekoppeltes Steuerverfahren nach Anspruch 10 oder 11, wobei das Erzeugen eines Wechselrichtersteuersignals basierend auf dem Stromkompensationssignal und Steuern, unter Verwendung des Wechselrichtersteuersignals, der Ziel-Wechselrichterschaltung so, dass sie den Oberschwingungskompensationsstrom an die Last ausgibt, Folgendes umfasst:
Umkehren einer Phase des Stromkompensationssignals, um ein Phasensteuersignal zu erhalten; und
Erzeugen des Wechselrichtersteuersignals basierend auf dem Stromkompensationssignal und dem Phasensteuersignal und Steuern, unter Verwendung des Wechselrichtersteuersignals, der Ziel-Wechselrichterschaltung so, dass sie den Oberschwingungskompensationsstrom an die Last ausgibt, wobei ein Stromwert des Oberschwingungskompensationsstroms ein erster Kompensationsstromwert oder ein zweiter Kompensationsstromwert ist und eine Phase des Oberschwingungskompensationsstroms dieselbe wie eine Phase des Phasensteuersignals ist.

## Revendications

1. Système d'alimentation électrique (1), dans lequel le système d'alimentation électrique comprend une alimentation électrique (11), un circuit de commande de collecte (13), une charge (2) et un onduleur (12), et le circuit de commande de collecte comprend un module de collecte connecté au réseau (105) et un module de commande (104) ;
l'alimentation électrique est connectée à la charge à l'aide de l'onduleur, la charge et un réseau électrique sont connectés à un point relié au réseau, une borne d'entrée du module de collecte connecté au réseau est connectée au point relié au réseau, et une borne de sortie du module de collecte connecté au réseau est connectée à l'onduleur à l'aide du module de commande ;
le module de collecte connecté au réseau est configuré pour obtenir une valeur d'harmonique de courant d'un courant connecté au réseau au niveau du point relié au réseau, et lorsque la valeur d'harmonique de courant du courant connecté au réseau est supérieure ou égale à un seuil d'harmonique cible, générer un signal de compensation de courant sur la base de la valeur d'harmonique de courant du courant connecté au réseau ; et
le module de commande est configuré pour générer un signal de commande d'onduleur sur la base du signal de compensation de courant, et commander, à l'aide du signal de commande d'onduleur, l'onduleur pour délivrer un courant de compensation d'harmonique à la charge ;
**caractérisé en ce que** :
l'onduleur comprend une pluralité de circuits d'onduleur (a, b, c), et la pluralité de circuits d'onduleur sont connectés en parallèle ; et le module de commande est en outre configuré pour commander, à l'aide du signal de commande d'onduleur, un circuit d'onduleur cible configuré pour délivrer le courant de compensation d'harmonique à la charge et cesser de délivrer un courant fondamental au point relié au réseau, dans lequel le circuit d'onduleur cible est un circuit d'onduleur qui est configuré pour demander une compensation dans la pluralité de circuits d'onduleur ; et
le module de commande est en outre configuré pour : lorsque le circuit d'onduleur cible délivre le courant de compensation d'harmonique à la charge, commander un circuit d'onduleur non cible dans l'onduleur pour délivrer un courant fondamental cible au point relié au réseau, dans lequel une valeur de courant du courant fondamental cible est une valeur de courant fondamental cible.

2. Système d'alimentation électrique selon la revendication 1, dans lequel le module de collecte connecté au réseau est en outre configuré pour : lorsque la valeur d'harmonique de courant du courant connecté au réseau est supérieure ou égale au seuil d'harmonique cible, obtenir une première valeur de courant de compensation sur la base de la valeur d'harmonique de courant du courant connecté au réseau et du seuil d'harmonique cible, pour utiliser la première valeur de courant de compensation en tant que signal de compensation de courant généré.

3. Système d'alimentation électrique selon la revendication 1, dans lequel le circuit de commande de collecte comprend en outre un module de collecte d'onduleur (306) ;
le module de collecte connecté au réseau est connecté au module de commande à l'aide du module de collecte d'onduleur, un point de connexion entre chaque circuit d'onduleur de l'onduleur et la charge est un point de connexion d'onduleur, le module de collecte d'onduleur comprend une pluralité de bornes de détection, et chaque borne de détection du module de collecte d'onduleur est connectée de manière correspondante au point de connexion d'onduleur de chaque circuit d'onduleur ;
le module de collecte connecté au réseau est en outre configuré pour : lorsque la valeur d'harmonique de courant du courant connecté au réseau est supérieure ou égale au seuil d'harmonique cible, obtenir une pluralité de valeurs de courant du courant connecté au réseau pendant une période temporelle de détection cible, et effectuer une analyse sur la pluralité de valeurs de courant du courant connecté au réseau pour obtenir un rang d'harmonique, une amplitude d'harmonique et une phase d'harmonique du courant connecté au réseau dans un cas dans lequel une amplitude du courant connecté au réseau est supérieure ou égale au seuil d'harmonique cible, pour utiliser le rang d'harmonique, l'amplitude d'harmonique et la phase d'harmonique en tant que signal de compensation de courant primaire généré ; et
le module de collecte d'onduleur est configuré pour obtenir une phase d'une tension de sortie du circuit d'onduleur cible correspondant au module de collecte d'onduleur, et obtenir une seconde valeur de courant de compensation sur la base de la phase de la tension de sortie du circuit d'onduleur cible et du signal de compensation de courant primaire, pour utiliser la seconde valeur de courant de compensation en tant que signal de compensation de courant généré.

4. Système d'alimentation électrique selon la revendication 2 ou 3, dans lequel le module de commande comprend une unité de commande de phase (4041) et une unité de commande d'amplitude (4042) ;
le module de collecte connecté au réseau est connecté à l'unité de commande de phase, et l'unité de commande de phase est connectée à l'onduleur à l'aide de l'unité de commande d'amplitude ;
l'unité de commande de phase est configurée pour obtenir le signal de compensation de courant et effectuer une inversion de phase sur le signal de compensation de courant pour générer un signal de commande de phase ; et
l'unité de commande d'amplitude est configurée pour générer le signal de commande d'onduleur sur la base du signal de compensation de courant généré et du signal de commande de phase, et commander, à l'aide du signal de commande d'onduleur, le circuit d'onduleur cible dans l'onduleur pour délivrer le courant de compensation d'harmonique à la charge, dans lequel une valeur de courant du courant de compensation d'harmonique est la première valeur de courant de compensation ou la seconde valeur de courant de compensation, et une phase du courant de compensation d'harmonique est identique à une phase du signal de commande de phase.

5. Système d'alimentation électrique selon la revendication 4, dans lequel le système d'alimentation électrique comprend en outre un circuit de transformateur (507), et l'alimentation électrique est connectée à l'onduleur à l'aide du circuit de transformateur.

6. Système d'alimentation électrique selon la revendication 5, dans lequel le système d'alimentation électrique comprend en outre un boîtier combineur (608), et le circuit de transformateur est connecté à l'onduleur à l'aide du boîtier combineur.

7. Système d'alimentation électrique selon la revendication 6, dans lequel le système d'alimentation électrique comprend en outre un bus de courant continu ; le circuit de transformateur est connecté au bus de courant continu à l'aide du boîtier combineur, et le bus de courant continu est connecté à l'onduleur.

8. Système d'alimentation électrique selon la revendication 7, dans lequel le système d'alimentation électrique comprend en outre un appareil de connexion et de déconnexion du réseau (709), et l'onduleur est connecté au réseau électrique à l'aide de l'appareil de connexion et de déconnexion du réseau.

9. Procédé de commande connecté au réseau, appliqué à un onduleur (12) connecté à un réseau électrique (3), dans lequel le procédé comprend :
l'obtention (S701) d'une valeur d'harmonique de courant d'un courant connecté au réseau au niveau d'un point relié au réseau de l'onduleur ;
lorsque la valeur d'harmonique de courant du courant connecté au réseau est supérieure ou égale à un seuil d'harmonique cible, la génération (S702) d'un signal de compensation de courant sur la base de la valeur d'harmonique de courant du courant connecté au réseau ; et
la génération (S702) d'un signal de commande d'onduleur sur la base du signal de compensation de courant, et la commande, à l'aide du signal de commande d'onduleur, de l'onduleur pour délivrer un courant de compensation d'harmonique à une charge ;
**caractérisé en ce que** :
l'onduleur comprend une pluralité de circuits d'onduleur (a, b, c) et la commande de l'onduleur pour délivrer le courant de compensation d'harmonique à la charge comprend :
la commande (S801), à l'aide du signal de commande d'onduleur, d'un circuit d'onduleur cible, pour délivrer le courant de compensation d'harmonique à la charge et cesser de délivrer un courant fondamental au point relié au réseau, dans lequel le circuit d'onduleur cible est un circuit d'onduleur qui demande une compensation dans la pluralité de circuits d'onduleur ; et
lorsque le circuit d'onduleur cible délivre le courant de compensation d'harmonique à la charge, la commande (S802) d'un circuit d'onduleur non cible dans l'onduleur pour délivrer un courant fondamental cible au point relié au réseau, dans lequel une valeur de courant du courant fondamental cible est une valeur de courant fondamental cible.

10. Procédé de commande connecté au réseau selon la revendication 9, dans lequel la génération d'un signal de compensation de courant sur la base de la valeur d'harmonique de courant du courant connecté au réseau comprend :
la réalisation d'une analyse sur la valeur d'harmonique de courant du courant connecté au réseau pour obtenir une première valeur de courant de compensation, et l'obtention de la première valeur de courant de compensation sur la base de la valeur d'harmonique de courant du courant connecté au réseau et du seuil d'harmonique cible, pour utiliser la première valeur de courant de compensation en tant que signal de compensation de courant généré.

11. Procédé de commande connecté au réseau selon la revendication 9, dans lequel la génération d'un signal de compensation de courant sur la base de la valeur d'harmonique de courant du courant connecté au réseau comprend :
lorsque la valeur d'harmonique de courant du courant connecté au réseau est supérieure ou égale au seuil d'harmonique cible, l'obtention d'une pluralité de valeurs de courant du courant connecté au réseau pendant une période temporelle de détection cible, et la réalisation d'une analyse sur la pluralité de valeurs de courant du courant connecté au réseau pour obtenir un rang d'harmonique, une amplitude d'harmonique et une phase d'harmonique du courant connecté au réseau dans un cas dans lequel une amplitude du courant connecté au réseau est supérieure ou égale au seuil d'harmonique cible, pour utiliser le rang d'harmonique, l'amplitude d'harmonique et la phase d'harmonique en tant que signal de compensation de courant primaire généré ; et
l'obtention d'une phase d'une tension de sortie du circuit d'onduleur cible correspondant à un module de collecte d'onduleur, et l'obtention d'une seconde valeur de courant de compensation sur la base de la phase de la tension de sortie du circuit d'onduleur cible et du signal de compensation de courant primaire, pour utiliser la seconde valeur de courant de compensation en tant que signal de compensation de courant généré.

12. Procédé de commande connecté au réseau selon la revendication 10 ou 11, dans lequel la génération d'un signal de commande d'onduleur sur la base du signal de compensation de courant, et la commande, à l'aide du signal de commande d'onduleur, du circuit d'onduleur cible pour délivrer le courant de compensation d'harmonique à la charge comprend :
l'inversion d'une phase du signal de compensation de courant pour obtenir un signal de commande de phase ; et
la génération du signal de commande d'onduleur sur la base du signal de compensation de courant et du signal de commande de phase, et la commande, à l'aide du signal de commande d'onduleur, du circuit d'onduleur cible pour délivrer le courant de compensation d'harmonique à la charge, dans lequel une valeur de courant du courant de compensation d'harmonique est une première valeur de courant de compensation ou une seconde valeur de courant de compensation, et une phase du courant de compensation d'harmonique est identique à une phase du signal de commande de phase.
